# EUROPEAN PATENT SPECIFICATION

(11) **EP 0 789 170 B1**
(45) Date of publication and mention of the grant of the patent: **09.04.2003**
(21) Application number: 96109870.4
(22) Date of filing: 19.06.1996
(51) Int. Cl.: F16H 61/06, F16H 61/20, F16H 59/50

(54) **Pressure regulation at vehicle start for automatic transmission**
Drucksteuerung für automatische Getriebe beim Anfahren des Fahrzeugs
Régulation de pression dans une boîte de vitesses automatique au démarrage d'un véhicule

(30) Priority: 31.08.1995 JP 22431195
(43) Date of publication of application: 13.08.1997
(73) Proprietor: AISIN AW CO., LTD., Anjo-shi Aichi-ken 444-11 (JP)
(72) Inventor: Kazumasa, Tsukamoto, Anjo-shi, Aichi-ken, 444-11 (JP); Masahiro, Hayabuchi, Anjo-shi, Aichi-ken, 444-11 (JP); Yoshihisa, Yamamoto, Anjo-shi, Aichi-ken, 444-11 (JP); Yuki, Kousaka, Anjo-shi, Aichi-ken, 444-11 (JP); Hiroshi, Tsutsui, Anjo-shi, Aichi-ken 444-11 (JP)
(74) Representative: VOSSIUS & PARTNER

(56) References cited:
- EP-A- 0 742 388
- US-A- 4 633 985
- US-A- 4 644 826
- US-A- 4 800 497
- US-A- 5 272 630
- PATENT ABSTRACTS OF JAPAN vol. 017, no. 096 (M-1372), 25 February 1993 & JP 04 290671 A (TOYOTA MOTOR CORP), 15 October 1992,

## Description

The present invention relates to a control system for an automatic transmission.

In the automatic transmission of the prior art, the rotation, as generated by the engine, is transmitted through a fluid transmission unit such as a torque converter to a speed change unit, in which its speed is changed. Between the fluid transmission unit and the speed change unit, moreover, there is arranged a first clutch (or input clutch) which can be applied/released to interchange a neutral range (as will be called the "N-range") and a forward running range (as will be called the "D-range").

In the automatic transmission, moreover, when the D-range is selected, when the vehicle speed is zero, when the accelerator pedal is released and when the brake pedal is depressed, a neutral control is effected by lowering the oil pressure of the hydraulic servo to release the first clutch so that the load to be applied to the engine is lightened to improve the fuel economy and to prevent the vibration in the vehicle.

When the first clutch is applied to start the vehicle, moreover, the delay in the engagement of the first clutch is prevented by making the rise in the oil pressure of the hydraulic servo of the case, in which only the accelerator pedal is depressed but the remaining conditions are unchanged (as will be called the "stall state") faster than the rise in the oil pressure of the hydraulic servo of the case in which only the brake pedal is released but the remaining conditions are unchanged (as will be called the "idle state").

Specifically, in the idle state, as the brake pedal is released to start the rise in the oil pressure of the hydraulic servo, the engagement of the first clutch is started. Therefore, no influence is then caused even if the delay in the engagement of the first clutch occurs when the accelerator pedal is depressed.

In the stall state, on the contrary, as the accelerator pedal is depressed to start the rise in the oil pressure of the hydraulic servo, the engagement of the first clutch is started. If the delay in the engagement of the first clutch occurs, the engine RPM has risen as the accelerator pedal is depressed when the engagement of the first clutch is started. As a result, the application shock is caused by the delay in the engagement of the first clutch. In the stall state, therefore, the rise in the oil pressure of the hydraulic servo is quickened to prevent the delay in the engagement of the first clutch (see e.g. JP-B-75431/1992 & JP-A-60060351).

In the aforementioned automatic transmission of the prior art, however, if the accelerator pedal is depressed with a slight delay after the brake pedal has been released, the engine RPM may have risen before the engagement of the first clutch is not started. In this case, the delay in the engagement also occurs as in the stall state so that the application shock occurs.

In EP 0 742 388 A (published 13.11.96), a control system for an automatic transmission is disclosed comprising a clutch which is adapted to be applied by a hydraulic servo when a forward running range is selected. An application means raises the oil pressure gradually, but the oil pressure to be fed to the hydraulic servo is abruptly raised, when an application ending condition is satisfied if the throttle opening is not fully closed, and after a first set time has elapsed if the throttle opening is fully closed.

In the nearest prior art US 5,272,630, a control system for an automatic transmission is disclosed, in which an engagement of a forward-drive clutch following a neutral idle state is carried out by providing a closed-loop clutch engagement control circuit, whereby a residual or threshold pressure is supplied to a servo to engage the clutch at the beginning of the acceleration mode by means of a closed-loop controller that assures that the forward clutch will be filled and stroked and ready to be fully applied when the throttle is advanced by the driver.

The prior art US-A-5272630 shows the nearest prior art as follow:
A control system for an automatic transmission, comprising: a clutch (FWD) adapted to be applied when a forward running range is selected,
wherein the control unit includes: stop state detecting means by that the vehicle speed is substantially zero, that the accelerator pedal is released and that the brake pedal is depressed; release means for bringing the clutch into a substantially released state by lowering the oil pressure when the vehicular stop state is detected; application means and engagement start detecting means for detecting whether or not the engagement of the clutch is started and
wherein the application means raises the oil pressure fed to the hydraulic servo, according to a first characteristic, if the vehicular stop state is not detected by releasing the brake pedal with the accelerator pedal being released, according to a second characteristic in which the rising rate in the oil pressure is higher than that of the first characteristic, if the vehicular stop state is not detected by depressing the accelerator pedal, and according to the second characteristic in place of the first characteristic if the vehicular stop state is not detected by releasing the brake pedal with the accelerator pedal being released and if the accelerator pedal is depressed while it is detected that the engagement of the clutch is not started.

In US 4,800,497, a clutch pressure control apparatus is disclosed, wherein clutch engagement pressure is automatically controlled according to engine speed based on a first function. Further, the apparatus comprises a controller including a second function. The second function is of clutch pressure and time, incorporating accelerator stroke as a parameter to modify an actual engine speed signal to be inputted to the first function.

The present invention has an object to solve the problems of the aforementioned control system for an automatic transmission of the prior art and to provide a control system for an automatic transmission, which can be freed from any delay in the engagement of a clutch even with any operation of the driver thereby to prevent the occurrence of the application shock.

Therefore, according to an aspect of the present invention, there is provided a control system for an automatic transmission of the present invention comprising: a clutch adapted to be applied when a forward running range is selected, for transmitting the rotation of an engine to a speed change unit; a hydraulic servo for applying the clutch when fed with an oil pressure; and a control unit for controlling the oil pressure to be fed to the hydraulic servo

Moreover, the control unit includes: stop state detecting means for detecting the stop state of a vehicle, as conditioned by that the vehicle speed is substantially zero, that the accelerator pedal is released and that the brake pedal is depressed; release means for bringing the clutch into a substantially released state by lowering the oil pressure of the hydraulic servo when the vehicular stop state is detected; application means for applying the clutch when the vehicular stop state is not detected during the operation of the release means; and engagement start detecting means for detecting whether or not the engagement of the clutch is started.

Moreover, the application means raises the oil pressure to be fed to the hydraulic servo, according to a first characteristic, if the vehicular stop state is not detected by releasing the brake pedal with the accelerator pedal being released, according to a second characteristic, in which the rising rate in the oil pressure is higher than that of the first characteristic, if the vehicular stop state is not detected by depressing the accelerator pedal, and according to the second characteristic in preference to the first characteristic if the vehicular stop state is not detected by releasing the brake pedal with the accelerator pedal being released and if the accelerator pedal is depressed while it is detected that the engagement of the clutch is not started.

In a control system for an automatic transmission according to another aspect of the present invention, the engagement start detecting means decides that the engagement of the clutch is not started, if the time has elapsed from the start of the feed of the oil pressure to the hydraulic servo does not reach the time which is set to correspond to the state in which the engagement of the clutch is not started.

In a control system for an automatic transmission according to still another aspect of the present invention, in the first characteristic, a constant shelf pressure is generated by the time the engagement of the clutch is started, and the oil pressure is then raised at a constant gradient, and wherein in the second characteristic, a shelf pressure higher than that of the first characteristic is generated, and the oil pressure is then raised at a constant gradient.

In a control system for an automatic transmission according to a further aspect of the present invention, the shelf pressures of the first characteristic and the second characteristic are made the higher for the larger throttle opening, and wherein the gradients of the oil pressures of the first characteristic and the second characteristic are made the steeper for the larger throttle opening.
Fig. 1 is a functional block diagram of a control system of an automatic transmission in a mode of embodiment of the present invention;
Fig. 2 is a schematic diagram of the automatic transmission in the mode of embodiment of the present invention;
Fig. 3 is a table enumerating the operations of the automatic transmission in the mode of embodiment of the present invention;
Fig. 4 is a first diagram showing a hydraulic control unit in the mode of embodiment of the present invention;
Fig. 5 is a second diagram showing a hydraulic control unit in the mode of embodiment of the present invention;
Fig. 6 is a flow chart of a neutral control routine in the mode of embodiment of the present invention;
Fig. 7 is a time chart of an automatic transmission control system in the mode of embodiment of the present invention;
Fig. 8 is a first flow chart of a first clutch release control routine in the mode of embodiment of the present invention;
Fig. 9 is a second flow chart of the first clutch release control routine in the mode embodiment of the present invention;
Fig. 10 is a diagram of relations between an engine RPM, and an input torque and a throttle pressure in the mode of embodiment of the present invention;
Fig. 11 is a flow chart of a zero vehicle speed estimating routine in the mode of embodiment of the present invention;
Fig. 12 is a diagram for explaining the state of a first clutch in the mode embodiment of the present invention;
Fig. 13 is a time chart when the first clutch in the mode of embodiment of the present invention is in a drag region;
Fig. 14 is a time chart when the first clutch in the mode of embodiment of the present invention is in a slip region;
Fig. 15 is a first flow chart of an in-neutral control routine in the mode of embodiment of the present invention;
Fig. 16 is a second flow chart of an in-neutral control routine in the mode of embodiment of the present invention;
Fig. 17 is a flow chart of a threshold value updating routine in the mode of embodiment of the present invention;
Fig. 18 is a first flow chart of a first clutch application control routine in the mode of embodiment of the present invention;
Fig. 19 is a second flow chart of a first clutch application control routine in the mode of embodiment of the present invention;
Fig. 20 is a diagram showing a first map in the mode of embodiment of the present invention;
Fig. 21 is a diagram showing a second map in the mode of embodiment of the present invention;
Fig. 22 is a time chart illustrating a first characteristic of the C-1 oil pressure in the mode of embodiment of the present invention;
Fig. 23 is a time chart illustrating a second characteristic of the C-1 oil pressure in the mode of embodiment of the present invention; and
Fig. 24 is a time chart illustrating the state at the changing time from the first characteristic to the second characteristic of the C-1 oil pressure in the mode of embodiment of the present invention.

A mode of embodiment of the present invention will be described in detail in the following with reference to the accompanying drawings.

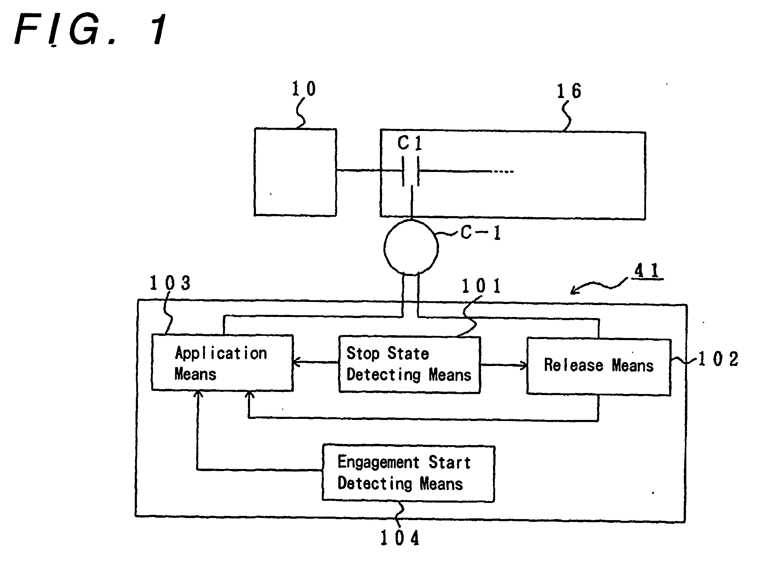

Fig. 1 is a functional block diagram of a control system for an automatic transmission in a mode of embodiment of the present invention.

In Fig. 1: reference numeral 10 designates an engine; numeral 16 a speed change unit; characters C1 a first clutch acting as a clutch adapted to be applied, when the D-range is selected, for transmitting the rotation of the engine 10 to a transmission mechanism of the speed change unit 16; and characters C-1 a hydraulic servo for applying/releasing the first clutch C1.

Moreover: numeral 41 designates an automatic transmission control unit acting as a control system; numeral 101 stop state detecting means for detecting the stop state of the vehicle on conditions that the vehicle speed is substantially zero, that the not-shown accelerator pedal is released and the not-shown brake pedal is depressed; numeral 102 release means for releasing the first clutch C1 substantially by lowering the oil pressure of the hydraulic servo C-1 when the stop state of the vehicle is detected; numeral 103 application means for applying the first clutch C1 when the stop state of the vehicle is not detected during the operation of the release means 102; and numeral 104 engagement start detecting means for detecting whether or not the engagement of the first clutch C1 is started.

Moreover, the application means 103 raises the oil pressure to be fed to the hydraulic servo C-1, according to a first characteristic, if the vehicular stop state is not detected by releasing the brake pedal with the accelerator pedal being released, according to a second characteristic, in which the rising rate in the oil pressure is higher than that of the first characteristic, if the vehicular stop state is not detected by depressing the accelerator pedal, and according to the second characteristic in preference to the first characteristic if the vehicular stop state is not detected by releasing the brake pedal with the accelerator pedal being released and if the accelerator pedal is depressed while it is detected that the engagement of the clutch C1 is not started.

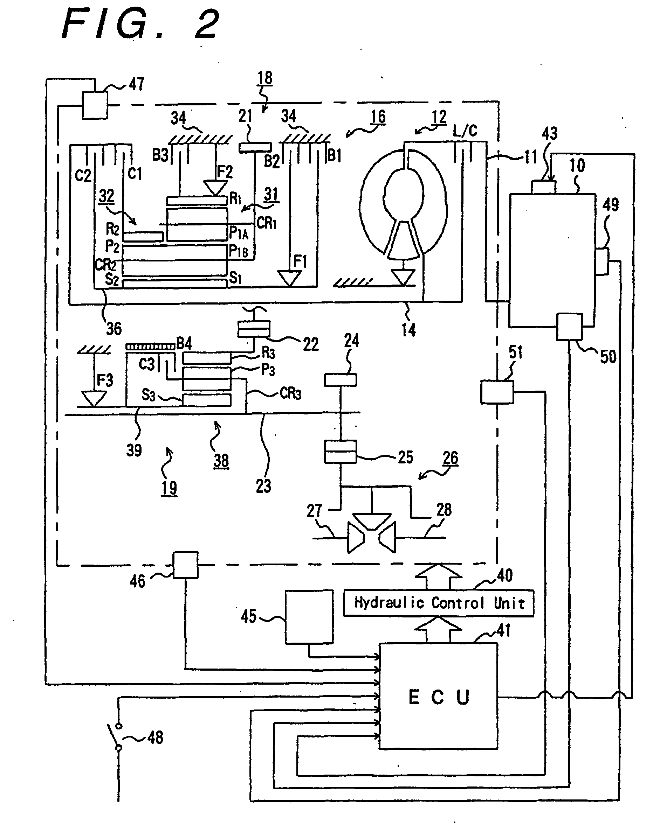

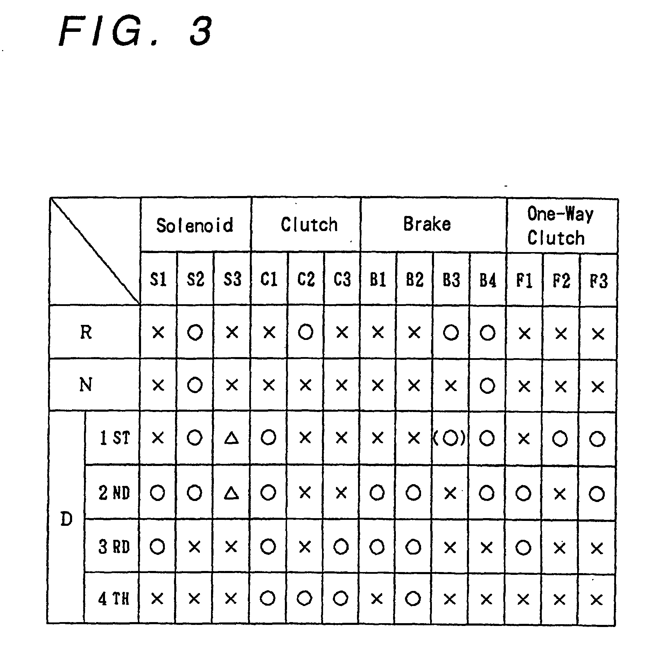

Fig. 2 is a schematic diagram of the automatic transmission in the mode of embodiment of the present invention, and Fig. 3 is a table enumerating the operations of the automatic transmission in the mode of embodiment of the present invention.

As shown, the rotation, as generated by the engine 10, is transmitted through an output shaft 11 to the torque converter 12. This torque converter 12 transmits the rotation of the engine 10 to an output shaft 14 through a fluid (or working oil) but is enabled to transmit the rotation directly to the output shaft 14, when the vehicle speed exceeds a predetermined value so that a lockup clutch L/C is applied.

To the output shaft 14, there is connected the speed change unit 16 for establishing four forward and one reverse speeds. This speed change unit 16 is constructed to include a main transmission 18 for three forward and one reverse speeds and an under-drive auxiliary transmission 19. Moreover, the rotation of the main transmission 18 is transmitted through a counter drive gear 21 and a counter driven gear 22 to the auxiliary transmission 19, and the rotation of the output shaft 23 of the auxiliary transmission 19 is transmitted through an output gear 24 and a ring gear 25 to a differential mechanism 26.

In this differential mechanism 26, the rotation, as transmitted through the output gear 24 and the ring gear 25, is differentiated so that the differential rotations are transmitted through lefthand and righthand drive shafts 27 and 28 to the not-shown drive wheels.

The main transmission 18 is equipped with a first planetary gear unit 31 and a second planetary gear unit 32 and further with the first clutch clutch C1, a second clutch C2, a first brake B1, a second brake B2, a third brake B3 and one-way clutches F1 and F2 for transmitting the torque selectively between the individual elements of the first planetary gear unit 31 and the second planetary gear unit 32.

The first planetary gear unit 31 is composed of: a ring gear R₁ connected to a drive unit casing 34 through the third brake B3 and the one-way clutch F2 which are arranged in parallel with each other; a sun gear S₁ formed on a sun gear shaft 36 fitted on and rotatably supported by the output shaft 14; a carrier CR₁ connected to the counter drive gear 21; and pinions P_{1A} and P_{1B} meshing between the ring gear R₁ and the sun gear S₁ and rotatably supported by the carrier CR₁.

Moreover, the sun gear shaft 36 is connected through the second clutch C2 to the output shaft 14. The sun gear shaft 36 is further connected through the first brake B1 to the drive unit casing 34 and through the one-way clutch F1 and the second brake B2, as arranged in series, to the drive unit casing 34.

On the other hand, the second planetary gear unit 32 is composed of: a ring gear R₂ connected through the first clutch C1 to the output shaft 14; a sun gear S₂ formed on the sun gear shaft 36 integrally with the sun gear S₁; a carrier CR₂ connected to the carrier CR₁; and a pinion P₂ meshing between the ring gear R₂ and the sun gear S₂, rotatably supported by the carrier CR₂ and formed integrally with the pinion P_{1B}.

Moreover, the counter drive gear 21 is made to mesh with the counter driven gear 22 arranged in the auxiliary transmission 19, to transmit the rotation, as has its speed changed by the main transmission 18, to the auxiliary transmission 19.

This auxiliary transmission 19 is equipped with a third planetary gear unit 38 and with a third clutch C3, a fourth brake B4 and a one-way clutch F3 for transmitting the torque selectively between the individual elements of the third planetary gear unit 38.

The third planetary gear unit 38 is composed of: a ring gear R₃ connected to the counter driven gear 22; a sun gear S₃ formed on a sun gear shaft 39 rotatably fitted on the output shaft 23; a carrier CR₃ fixed on the output shaft 23; and a pinion P₃ meshing between the ring gear R₃ and the sun gear S₃ and rotatably supported by the carrier CR₃.

Here will be described the operations of the automatic transmission having the construction thus far described.

Fig. 3 shows a first solenoid valve S1, a second solenoid valve S2, a third solenoid valve S3, the first clutch C1, the second clutch C2, the third clutch C3, the first brake B1, the second brake B2, the third brake B3, the fourth brake B4, and the one-way clutches F1 to F3. Moreover, a reverse running range R, an N-range N, a D-range D, a 1st-speed gear stage 1ST, a 2nd-speed gear stage 2ST, a 3rd-speed gear stage 3RD, and a 4th-speed gear stage 4TH.

Moreover, symbol ○ indicates that a first solenoid signal S₁, a second solenoid signal S₂ and a third solenoid signal S₃ for opening/closing the first solenoid valve S1, the second solenoid valve S2 and the third solenoid valve S3 respectively are ON, that the first clutch C1, the second clutch C2, the third clutch C3, the first brake B1, the second brake B2, the third brake B3 and the fourth brake B4 are applied, and that the one-way clutches F1 to F3 are locked. On the other hand, symbol X indicates that the first solenoid signal S₁, the second solenoid signal S₂ and the third solenoid signal S₃ for opening/closing the first solenoid valve S1, the second solenoid valve S2 and the third solenoid valve S3 are OFF, that the first clutch C1, the second clutch C2, the third clutch C3, the first brake B1, the second brake B2, the third brake B3 and the fourth brake B4 are released, and that the one-way clutches F1 to F3 are free.

Incidentally, symbol Δ indicates the state in which the component is turned ON/OFF at the neutral control time, and symbol (○) indicates that the third brake B3 is applied at the engine brake time.

At the 1st speed in the D-range, the first clutch C1 and the fourth brake B4 are applied to lock the one-way clutches F2 and F3. Then, the rotation of the output shaft 14 is transmitted through the first clutch C1 to the ring gear R₂. In this state, the rotation of the ring gear R₁ is blocked by the one-way clutch F2 so that the rotation of the carrier CR₂ is drastically decelerated and transmitted to the counter driven gear 21 while rotating the sun gear S₂ idly.

The rotation, as transmitted from the counter drive gear 21 to the counter driven gear 22, is transmitted to the ring gear R₃. However, the rotation of the sun gear S₃ is blocked by the fourth brake B4 so that the rotation of the carrier CR₃ is further decelerated and transmitted to the output shaft 23.

At the 2nd speed in the D-range, on the other hand, the first clutch C1, the first brake B1, the second brake B2 and the fourth brake B4 are applied to lock the one-way clutches F1 and F3. Then, the rotation of the output shaft 14 is transmitted through the first clutch C1 to the ring gear R₂. The rotation of this ring gear R₂ is decelerated and transmitted to the carrier CR₂, because the rotation of the sun gear S₂ is blocked by the second brake B2 and the one-way clutch F1. The rotation of the carrier CR₂ is transmitted to the counter drive gear 21 while rotating the ring gear R₁ idly.

The rotation, as transmitted from the counter drive gear 21 to the counter driven gear 22, is transmitted to the ring gear R₃. However, the rotation of the sun gear S₃ is blocked by the fourth brake B4 so that the rotation of the carrier CR₃ is decelerated and transmitted to the output shaft 23.

Next, at the 3rd speed in the D-range, the first clutch C1, the third clutch C3, the first brake B1 and the second brake B2 are applied to lock the one-way clutch F1. Then, the rotation of the output shaft 14 is transmitted through the first clutch C1 to the ring gear R₂. The rotation of this ring gear R₂ is decelerated and transmitted to the carrier CR₂ because the rotation of the sun gear S₂ is blocked by the second brake B2 and the one-way clutch F1. The rotation of the carrier CR₂ is transmitted to the counter drive gear 21 while rotating the ring gear R₁ idly.

The rotation, as transmitted from the counter drive gear 21 to the counter driven gear 22, is transmitted to the ring gear R₃. However, the relative rotation between the carrier CR₃ and the sun gear S₃ is blocked by the third clutch C3 so that the third planetary gear unit 38 comes into a direct-coupled state. As a result, the rotation of the counter driven gear 22 is unchangedly transmitted to the output shaft 23.

Next, at the 4th speed in the D-range, the first clutch C1, the second clutch C2, the third clutch C3 and the second brake B2 are applied. Then, the rotation of the output shaft 14 is transmitted through the first clutch C1 to the ring gear R₂ and through the second clutch C2 to the sun gear S₂ to bring the first planetary gear unit 31 and the second planetary gear unit 32 into direct-coupled states. As a result, the rotation of the output shaft 11 is unchangedly transmitted to the counter drive gear 21.

The rotation, as transmitted from the counter drive gear 21 to the counter driven gear 22, is transmitted to the ring gear R₃. However, the relative rotation between the carrier CR₃ and the sun gear S₃ is blocked by the third clutch C3 so that the third planetary gear unit 38 comes into the direct-coupled state. As a result, the rotation of the counter driven gear 22 is unchangedly transmitted to the output shaft 23.

Incidentally, the automatic transmission is provided with a hydraulic control unit 40 for establishing the individual gear stages by applying/releasing the first clutch C1, the second clutch C2, the third clutch C3, the first brake B1, the second brake B2, the third brake B3 and the fourth brake B4.

On the other hand, an engine control unit 43 is arranged so that the engine 10 can be controlled by the engine control unit 43.

Moreover, the hydraulic control unit 40 and the engine control unit 43 are connected with the automatic transmission control system (ECU) 41 so that they are operated according to the control program of the automatic transmission control system 41.

With this automatic transmission control system 41, on the other hand, there are individually connected a neutral start switch 45, an oil temperature sensor 46, the RPM sensor 47, a brake switch 48, the engine RPM sensor 49, a throttle opening sensor 50 and a vehicle speed sensor 51.

Moreover, the shift position of the not-shown shift lever, i.e., the selected range can be detected by the neutral start switch 45. The temperature of the oil in the hydraulic control unit 40 can be detected by the oil temperature sensor 46. The RPM of the output shaft 14 (as will be called the "clutch input side RPM") N_{C1}, as located at the input side of the first clutch C1, can be detected by the RPM sensor 47. The clutch input side RPM N_{C1} is detected as the output RPM of the torque converter 12.

Furthermore, whether or not the not-shown brake pedal is depressed can be detected by the brake switch 48. An engine RPM N_{E} can be detected by the engine RPM sensor 49. The throttle opening θ can be detected by the throttle opening sensor 50. The vehicle speed can be detected by the vehicle speed sensor 51. Incidentally, the engine RPM N_{E} is detected as the input RPM of the torque converter 12.

Here will be described the hydraulic control unit 40.

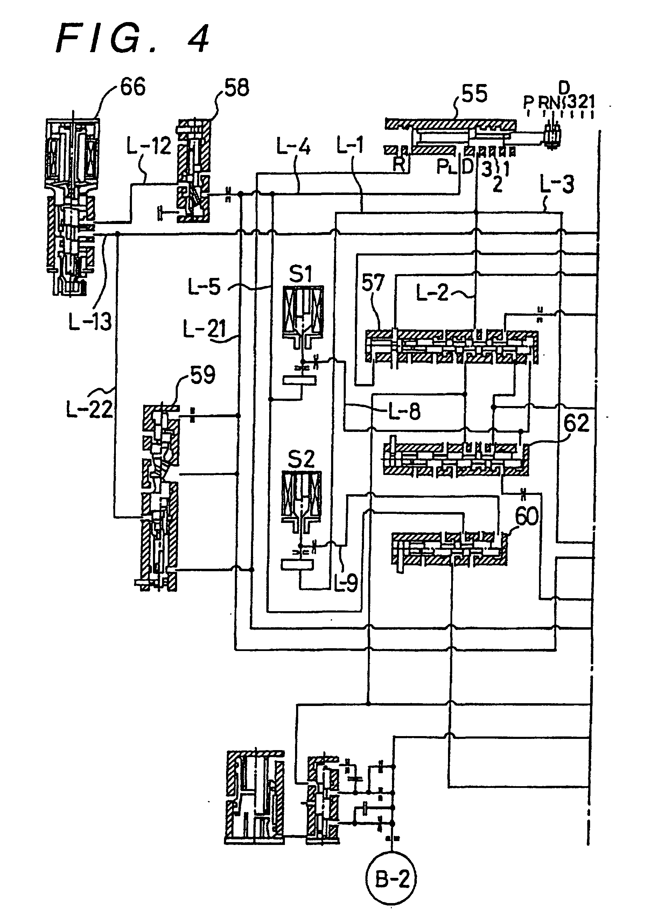

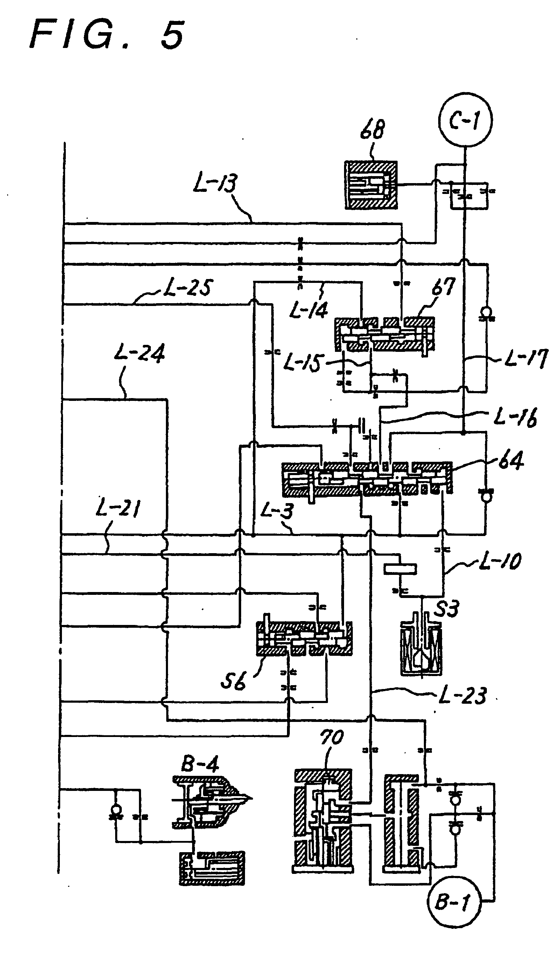

Fig. 4 is a first diagram showing a hydraulic control unit in the mode of embodiment of the present invention, and Fig. 5 is a second diagram showing a hydraulic control unit in the mode of embodiment of the present invention.

In these Figures, a primary valve 59 regulates the oil pressure coming from the not-shown oil pressure source and outputs it as a line pressure to an oil line L-21. Moreover, a manual valve 55 is provided with ports 1, 2, 3, D, P_{L} and R so that the line pressure, as fed from the primary valve 59 through oil lines L-21 and L-4 to the port P_{L}, is established as 1-range, 2-range, 3-range, D-range and R-range pressures at the respective ports 1, 2, 3, D and R by manipulating the not-shown shift lever.

When this shift lever is placed in the D-range position, the D-range pressure oil, as established in the port D, is fed through an oil line L-1 to the second solenoid valve S2, through an oil line L-2 to a 1-2 shift valve 57, and through an oil line L-3 to a B-1 sequence valve 56. On the other hand, the line pressure from the primary valve 59 is fed through the oil line L-21 to the third solenoid valve S3.

Moreover, the line pressure from the oil line L-21 is fed through the oil line L-4 to a solenoid modulator valve 58 and through an oil line L-5 to the first solenoid valve S1 and a 2-3 shift valve 60.

The first solenoid signal S₁, the second solenoid signal S₂ and the third solenoid signal S₃ for opening/closing the first solenoid valve S1, the second solenoid valve S2 and the third solenoid valve S3 are turned ON/OFF in response to a change-over signal coming from the automatic transmission control system 41 (Fig. 2). As a result, the first solenoid valve S1 feeds a signal oil pressure through an oil line L-8 to the 1-2 shift valve 57 and a 3-4 shift valve 62. The second solenoid valve S2 feeds a signal oil pressure through an oil line L-9 to the 2-3 shift valve 60. The third solenoid valve S3 feeds a change-over signal oil pressure through an oil line L-10 to a neutral relay valve 64.

The 1-2 shift valve 57 takes its upper half position (as located above the spool) at the 1st speed and its lower half position (as located below the spool) at the 2nd to 4th speeds. The 2-3 shift valve 60 takes its lower half position at the 1st and 2nd speeds and its upper half position at the 3rd and 4th speeds. The 3-4 shift valve 62 takes its upper half position at the 1st and 4th speeds and its lower half position at the 2nd and 3rd speeds. The neutral relay valve 64 takes its upper half position at the neutral control time and its lower half position at the 1st to 4th speeds.

The solenoid modulator valve 58 is connected through an oil line L-12 to a linear solenoid valve 66, which is connected through an oil line L-13 to a C-1 control valve 67. The linear solenoid valve 66 is further connected through an oil line L-22 to the primary valve 59.

Moreover, the linear solenoid valve 66 is controlled by a control signal received from the automatic transmission control system 41, to feed a throttle pressure P_{TH} as the control signal oil pressure through the oil line L-13 to the C-1 control valve 67. This C-1 control valve 67 is fed with the D-range pressure through the oil lines L-3 and L-14 so that it controls the fed D-range pressure to the control oil pressure (as will be called the "C-1 oil pressure") P_{C1} of the hydraulic servo C-1, as corresponding to the throttle pressure P_{TH} coming from the linear solenoid valve 66, and feeds it to an oil line L-15.

In the B-1 sequence valve 56, a spring is arranged at the lefthand end of the drawing whereas a control oil chamber is formed at the righthand end of the drawing, and the spring applies a spring load to the spool. Moreover, the B-1 sequence valve 56 is caused at the 1st speed to take its lower half position in response to the D-range pressure it receives at the control oil chamber through the oil line L-3. When the oil pressure is fed at the 2nd speed to a hydraulic servo B-2 so that it rises, the B-1 sequence valve 56 receives the sequence pressure from the hydraulic servo B-2 so that it is caused to take its upper half position by having its spool pushed rightward by the sequence pressure and the spring load.

As a result, the oil pressure from the 1-2 shift valve 57 is fed through the B-1 sequence valve 56 to the 3-4 shift valve 62 and further from the 3-4 shift valve 62 via an oil line L-24 through the B-1 control valve 70 to the hydraulic servo B-1. Thus, the oil pressure is fed to the hydraulic servo B-1 in response to the rise of the oil pressure in the hydraulic servo B-2.

Incidentally, the neutral relay valve 64 takes its upper half position at the neutral control time. In this neutral control, therefore, the C-1 oil pressure P_{C1}, as established in the oil line L-15, is fed through an oil line L-16, the neutral relay valve 64 and an oil line L-17 to the hydraulic servo C-1. Moreover, the oil pressure, as fed through the B-1 sequence valve 56 to the 3-4 shift valve 62, is also fed to the 1-2 shift valve 57, from which it is further fed as a signal pressure via an oil line L-25, through the neutral relay valve 64 and via an oil line L-23 to the B-1 control valve 70.

At the 1st to 4th speeds, moreover, the neutral relay valve 64 takes its lower half position. At the 1st to 4th speeds, therefore, the oil under the D-range pressure is fed through the oil line L-3, the neutral relay valve 64 and the oil line L-17 to the hydraulic servo C-1. In the neutral control, moreover, the neutral relay valve 64 is switched to its upper half position to connect the oil line L-16 and the oil line L-17.

Incidentally, numeral 68 designates a damper valve which is arranged in the oil line L-17 for smoothing the release of the oil from the hydraulic servo C-1, and characters B-4 designate a hydraulic servo of the fourth brake B4.

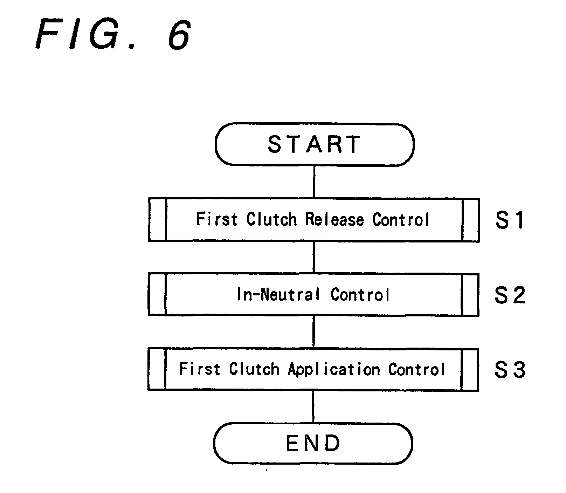

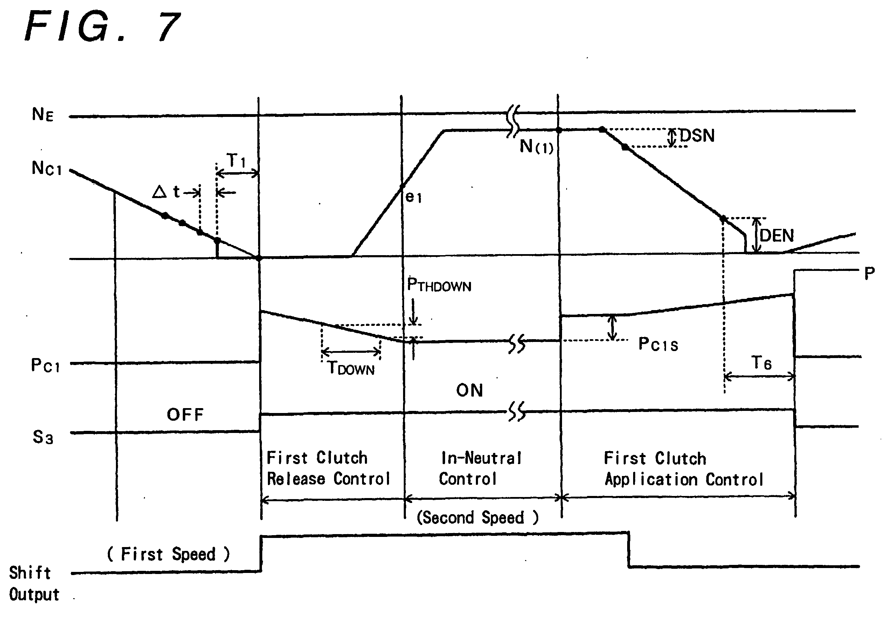

Fig. 6 is a flow chart of a neutral control routine in the mode of embodiment of the present invention, and Fig. 7 is a time chart of an automatic transmission control system in the mode of embodiment of the present invention. Incidentally, Fig. 7 is invoked in the later description of the individual subroutines.

Step S1: The release means 102 of the automatic transmission control unit 41 (Fig. 1) executes the first clutch release control. At this step, a zero vehicle speed estimation is executed to output the 2nd speed shift output at a set timing so that the applications of the second brake B2 (Fig. 2) and the first brake B1 are started to perform the hill-hold control thereby to sweep down the C-1 oil pressure P_{C1} at a set timing.

For this, the engine RPM N_{E} corresponding to the input torque is determined to output the C-1 oil pressure P_{C1} corresponding to the engine RPM N_{E}, and the C-1 oil pressure P_{C1} is gradually lowered.

Incidentally, the input torque can be detected not only from the engine RPM N_{E} but also indirectly from the engine air suction or the fuel injection rate. Moreover, the input torque of the speed change unit 16 can also be directly detected by the not-shown torque sensor. In this case, moreover, the torque sensor is attached to the output shaft 14 of the torque converter 12.

Step S2: An in-neutral control is executed to establish the neutral control state. At this step, stabilizations of the engine RPM N_{E} and the clutch input side RPM N_{C1} are awaited. After these stabilizations, the C-1 oil pressure P_{C1} is raised or lowered by set pressures according to the two RPMs.

Step S3: The application means 103 of the automatic transmission control unit 41 executed the first clutch application control. At this step, the C-1 oil pressure P_{C1} is raised by set pressures which are set on the basis of the throttle opening θ and the engine RPM N_{E}, to end the movement of the piston in the piston stroke of the hydraulic servo C-1 (Fig. 5). After the end of the movement of the piston in the piston stroke of the hydraulic servo C-1, the C-1 oil pressure P_{C1} is raised by set pressures to prevent the application shock.

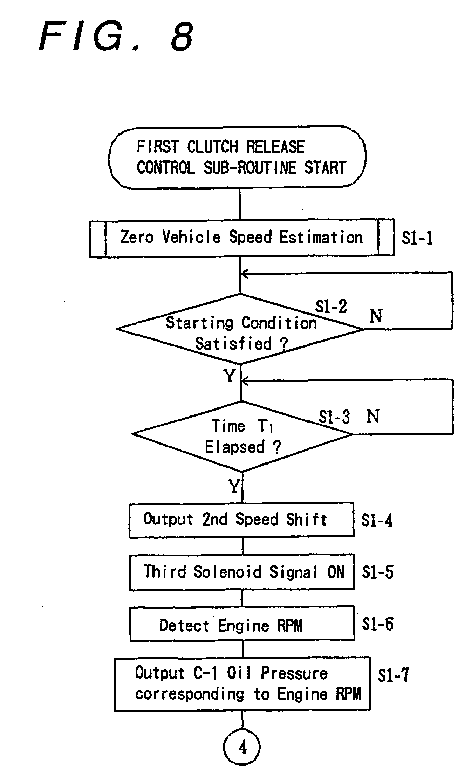

Next, the first clutch release control sub-routine at Step S1 of Fig. 6 will be described with reference to Figs. 8 to 10.

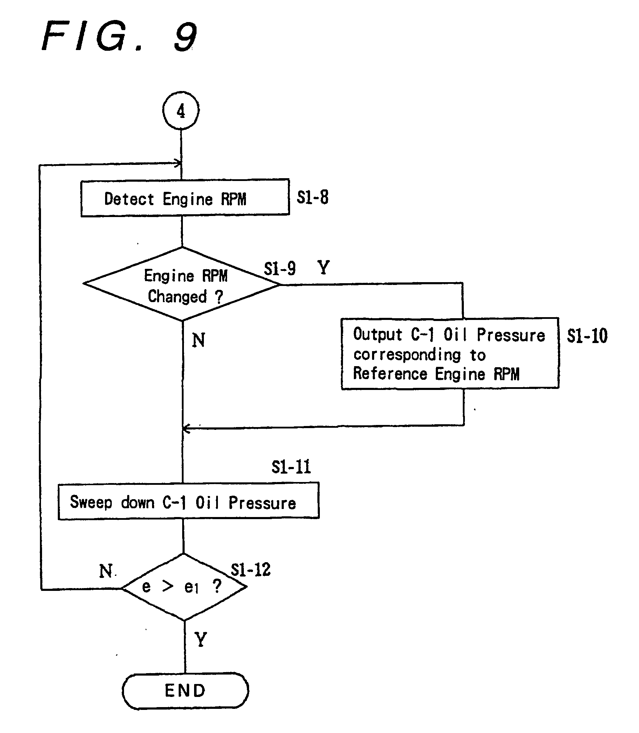

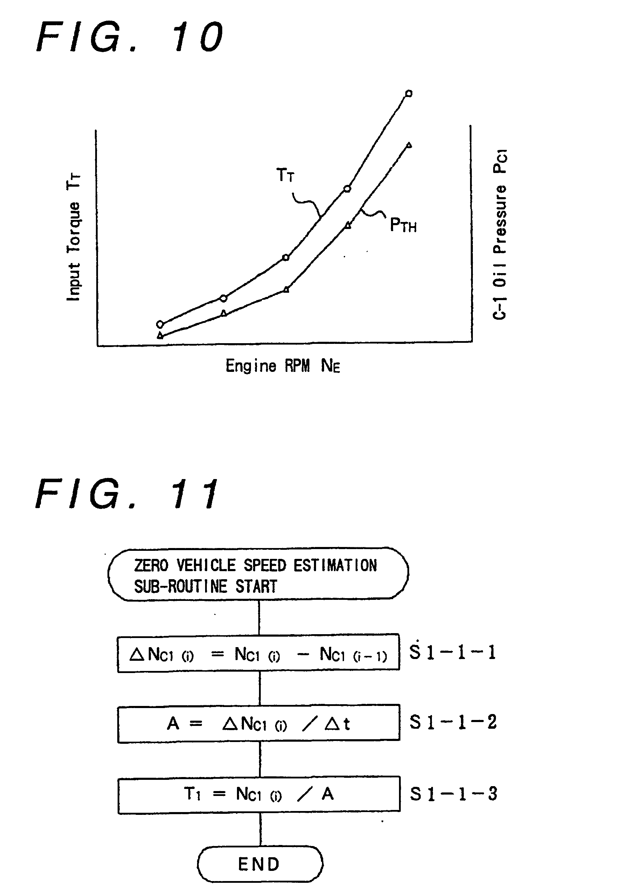

Fig. 8 is a first flow chart of a first clutch release control routine in the mode of embodiment of the present invention; Fig. 9 is a second flow chart of the first clutch release control routine in the mode of embodiment of the present invention; and Fig. 10 is a diagram of relations between an engine RPM, and an input torque and a throttle pressure in the mode of embodiment of the present invention. Incidentally, in Fig. 10, the abscissa indicates the engine RPM N_{E}, and the ordinate indicates the intake torque T_{T} (= t· C· N_{E}²) and the C-1 oil pressure P_{C1}.

Step S1-1: The zero vehicle speed is estimated on the basis of the variation of the clutch input side RPM N_{C1}.

Step S1-2: The stop state detecting means 101 (Fig. 1) awaits satisfaction of the starting condition for the neutral control. At the same time, the timing of the not-shown first timer is started.

In this case, it is decided that the starting condition is satisfied, if all the following individual conditions are satisfied: that the clutch input side RPM N_{C1} is substantially zero; that the not-shown accelerator pedal is released so that the throttle opening θ is less than a predetermined value; that the oil temperature detected by the oil temperature sensor 46 (Fig. 2) is higher than a predetermined value; and that the not-shown brake pedal is depressed so that the brake switch 48 is ON. Incidentally, whether or not the clutch input side RPM N_{C1} is substantially zero is decided depending upon whether or not the detection limit of the RPM sensor 47 is detected. In the present embodiment, it is decided that the detection limit is detected, when the actual vehicle speed takes a set value (2 [km/h]).

Step S1-3: The stop state detecting means 101 awaits lapse of a time period T₁ timed by the first timer, and the sub-routine advances to Step S1-4 if the time period T₁ elapses. Here, the time period T₁ is calculated by the zero vehicle speed estimation step, and the zero vehicle speed is estimated when the time period T₁ elapses.

Step S1-4: the 2nd-speed shift output for starting the hill-hold control is generated, and the first solenoid signal S₁ for opening/closing the first solenoid valve S1 (Fig. 4) is turned ON to feed the oil pressure to the hydraulic servo B-2 thereby to apply the second brake B2. As the oil pressure in the hydraulic servo B-2 rises, moreover, the sequence pressure in the hydraulic servo B-2 is fed to the B-1 sequence valve 56 (Fig. 5) to feed the oil pressure to the hydraulic servo B-1 thereby to apply the first brake B1.

Thus, the hill-hold control is executed to establish the 2nd-speed gear stage in the speed change unit 16 so that the first clutch C1, the first brake B1, the second brake B2 and the fourth brake B4 are applied to lock the one-way clutches F1 and F3. If the vehicle runs backward uphill in this state, a backward rotation is transmitted to the output shaft 23 of the auxiliary transmission 19 to rotate the ring gear R₁ forward. However, this forward rotation is blocked by the one-way clutch F2 so that the vehicle does not run backward.

Step S1-5: The third solenoid signal S₃ is turned ON to switch the neutral relay valve 64 to the upper half position thereby to bring the C-1 oil pressure P_{C1} into a controllable state.

Step S1-6: As shown in Fig. 10, the engine RPM N_{E} corresponding to the input torque T_{T} is detected to set the value of the engine RPM N_{E} to a reference engine RPM N_{Em}.

Step S1-7: The C-1 oil pressure P_{C1} immediately before the first clutch C1 is released according to the engine RPM N_{E} is established and outputted.

Step S1-8: The engine RPM N_{E} corresponding to the input torque T_{T} is detected again.

Step S1-9: The engine RPM N_{E} is compared with the reference engine RPM N_{Em} to decide whether or not it has changed. The sub-routine advances to Step S1-10, if the engine RPM N_{E} changed in comparison with the reference engine RPM N_{Em}, but to Step S1-11 if NOT.

Step S1-10: The value of the engine RPM N_{E} when it is decided at Step S1-9 that the engine RPM N_{E} has changed from the reference engine RPM N_{Em} is set in the reference engine RPM N_{Em}, and the C-1 oil pressure P_{C1} corresponding to the new reference engine RPM N_{Em} is established and outputted.

Step S1-11: The C-1 oil pressure P_{C1} is lowered (or swept down) by set pressures P_{THDOWN} for every lapse of a set time period T_{DOWN}, as expressed by the following formula:${\text{P}}_{\text{TH}} {\text{= P}}_{\text{TH}} {\text{- P}}_{\text{THDOWN}} \text{.}$

Step S1-12: After the establishment of the released state of the first clutch C1, the pressure reduction of Step S1-11 is continued till a speed ratio e (= N_{C1}/N_{E}) exceeds a constant e₁. When the speed ratio e exceeds the constant e₁, the pressure reduction of Step S1-11 is stopped to end the routine. If the speed ratio e fails to exceed the constant e₁, the sub-routine returns to Step S1-8. The constant e₁ is set to 0.75, for example, by considering the delay of the change in the clutch input side RPM N_{C1} for the operation of the oil pressure for releasing the first clutch C1. Incidentally, the speed ratio e may be substituted by the clutch input side RPM N_{C1}.

Incidentally, the applied state of the first clutch C1 is to be detected by deciding whether or not the difference (as will be called the "rotational difference") ΔN between the engine RPM N_{E} or the input side RPM of the torque converter 12 and the clutch input side RPM N_{C1} or the output side RPM has changed. The rotational difference ΔN does not change no matter whether the first clutch C1 might be completely applied or released. This makes it difficult to discriminate the state, in which the first clutch C1 is completely applied, and the state in which the first clutch C1 is released.

By awaiting the excess of the speed ratio e over the constant e₁, therefore, it is possible to reliably establish the state immediately before the application of the first clutch C1 is started. Incidentally, the rotational difference ΔN is calculated by the calculation means 102 in the automatic transmission control system 41.

Here will be described the sub-routine of the zero vehicle speed estimation at Step S1-1 of Fig. 8

Fig. 11 is a flow chart of a zero vehicle speed estimating routine in the mode of embodiment of the present invention.

Step S1-1-1: An RPM difference ΔN_{C1(i)} is calculated by subtracting a clutch input side RPM N_{C1(i-1)} of a time period Δt ago from the present clutch input side RPM N_{C1(i)}. In this case, the time period Δt is set with the clock in the automatic transmission control system 41 (Fig. 2) so that the clutch input side RPM N_{C1} is detected by every time periods Δt.

Step S1-1-2: A deceleration A of the vehicle is calculated by dividing the RPM difference ΔN_{C1(i)} by the time period Δt.

Step S1-1-3: The time period T₁ till the vehicle stop state is calculated by dividing the present clutch input side RPM N_{C1(i)} by the deceleration A.

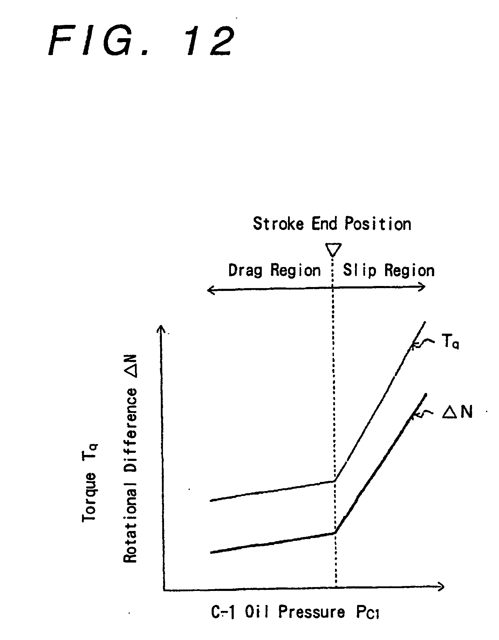

Next, the relations between the applied/released states of the first clutch C1 and the rotational difference ΔN will be described with reference to Figs. 12 to 14.

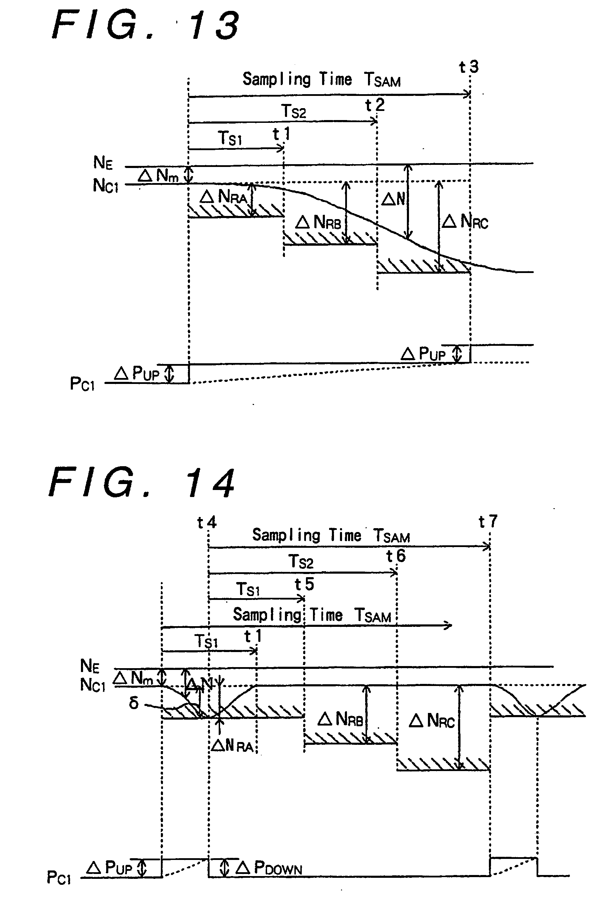

Fig. 12 is a diagram for explaining the state of a first clutch in the mode of embodiment of the present invention; Fig. 13 is a time chart when the first clutch in the mode of embodiment of the present invention is in a drag region; and Fig. 14 is a time chart when the first clutch in the mode embodiment of the present invention is in a slip region. Incidentally, in Fig. 12, the abscissa indicates the C-1 oil pressure P_{C1}, and the ordinate indicates the rotational difference ΔN and a torque T_{q}.

In Fig. 12, letters T_{q} designate the torque to be transmitted from the engine 10 (Fig. 2) to the speed change unit 16 through the first clutch C1, and letters ΔN designate the rotational difference.

As the C-1 oil pressure P_{C1} is gradually raised, as illustrated, the torque T_{q} increases so that the torque converter 12 is accordingly loaded to increase the rotational difference ΔN.

By determining the rotational difference ΔN, therefore, it is possible to acquire the applied/released states of the first clutch C1 (Fig. 2), i.e., the torque transmission state.

When the application of the first clutch C1 is started from its completely released state to raise the C-1 oil pressure P_{C1}, the piston of the hydraulic servo C-1 reaches the position (as will be called the "stroke end position") in which no stroke is left. When the C-1 oil pressure P_{C1} is further raised, the first clutch C1 comes into the completely applied state. Hence, the region from the completely released state of the first clutch C1 to the arrival of the piston at the stroke end position will be termed as the drag region (or inoperative region) whereas the region from the arrival of the piston at the stroke end position to the completely applied state of the first clutch C1 will be termed as the slip region (or operative position).

In the drag region, the individual friction elements of the first clutch C1 are not in contact with each other. However, the torque T_{q} is transmitted more or less through the first clutch C1 by the viscosity characteristics of the oil existing between the individual friction elements. Moreover, the torque T_{q} gradually increases, as the stroke of the piston increases whereas the clearances (or gaps) between the friction elements decrease. In the drag region, too, the rotational difference ΔN arises according to the transmission of the torque T_{q} and gradually increases as the torque T_{q} increases.

In the slip region, on the other hand, the individual friction elements are in contact with each other so that a frictional force comes out to increase the torque abruptly. Moreover, the piston has already reached the stroke end position so that the oil in the hydraulic servo C-1 quits its flow to raise the C-1 oil pressure abruptly. As a result, the frictional force is accordingly increased to increase the torque T_{q} more. As a result of the abrupt increase in the torque T_{q}, moreover, the rotational difference ΔN abruptly increases.

Here will be described the relation between the amount (as will be called the "variation") δ of the rotational difference ΔN according to the change in the applied/released states of the first clutch C1 and the amount (as will be called the "rate of change") ρ of the rotational difference ΔN for the unit time period. If the rotational difference ΔN at the start of a sampling time T_{SAM} is assumed to be a reference rotational difference ΔNₘ, the variation δ can be expressed by the difference between the rotational difference ΔN and the reference rotational difference ΔNₘ at an arbitrary time.

If the C-1 oil pressure P_{C1} to be fed to the hydraulic servo C-1 is to be raised, the rotational difference ΔN changes gradually in the drag region but abruptly in the slip region, as described above. As a result, the variation δ in the rotational difference ΔN is small in the drag region but large in the slip region. Moreover, the rate of change ρ of the rotational difference ΔN is also low in the drag region but high in the slip region.

Noting that the rate of change ρ is different in the drag region and in the slip region, standard rates of change ρ ₁ and ρ₂ in the drag region and in the slip region when the C-1 oil pressure P_{C1} is raised are determined to suitably select an intermediate value between the two rates of change ρ₁ and ρ₂, and this intermediate value is set as a reference rate of change ρ_{REF}.

If this reference rate of change ρ_{REF} is thus set, the rate of change ρ while the first clutch C1 is in the drag region is always smaller than the reference rate of change ρ_{REF} whereas the rate of change while the first clutch C1 is in the slip region is always larger than the reference rate of change ρ_{REF}.

By comparing the rate of change ρ and the reference rate of change ρ_{REF}, therefore, it can be easily decided whether the first clutch C1 is in the drag region or in the slip region. Specifically, it can be decided, if the rate of change ρ is lower than the reference value ρ_{REF}, that the first clutch C1 is in the drag region and, if the rate of change ρis higher than the reference value ρ_{REF}, that the first clutch C1 is in the slip region.

On the basis of this decision, moreover, it is possible to hold the state immediately before the first clutch C1 is transferred from the'drag region to the slip region.

When the in-neutral control is started, the automatic transmission control unit 41 lowers the C-1 oil pressure P_{C1} till at least the piston of the hydraulic servo C-1 starts its retraction, so that the first clutch C1 is transferred from the slip region to the drag region.

Subsequently, the C-1 oil pressure P_{C1} is so controlled that the rate of change ρ of the rotational difference ΔN may not exceed the reference rate of change ρ_{REF}. Here in the present mode of embodiment, when the rate of change ρ and the reference rate of change ρ_{REF} are to be compared, the comparison is not made directly between them but between the variation δ of the rotational difference ΔN for a set time period and the threshold value corresponding to the reference rate of change ρ_{REF}.

As shown in Figs. 13 and 14, moreover, the aforementioned set time periods are exemplified by not only the sampling time T_{SAM} but also the time periods T_{S1} and T_{S2} which are obtained by dividing the sampling time T_{SAM} into three. If, in this case, the timings for the time periods T_{S1} and T_{S2} and the sampling time T_{SAM} to elapse after the start of application of the first clutch C1 are designated by t1 to t3, respectively, the individual threshold values ΔN_{Ri} (i = A, B and C) of the timings t1 to t3 are expressed, as follows:${\text{ΔN}}_{\text{RA}} {\text{= ρ}}_{\text{REF}} {\text{· T}}_{\text{S1}} \text{;}$${\text{ΔN}}_{\text{RB}} {\text{= ρ}}_{\text{REF}} {\text{· T}}_{\text{S2}} \text{;}$ and${\text{ΔN}}_{\text{RC}} {\text{= ρ}}_{\text{REF}} {\text{· T}}_{\text{SM}} \text{.}$

Since the rate of change ρ is low in the drag region, the threshold value ΔN_{Ri} is not exceeded at the individual timings t1 to t3, as seen from Fig. 13, even if the variation δ of the rotational difference ΔN increases as the time elapses. Therefore, the automatic transmission control unit 41 raises the C-1 oil pressure P_{C1} by set pressures ΔP_{UP}, as the sampling time T_{SAM} elapses, to transfer the applied/released states of the first clutch C1 to the slip region side. Thus, the piston of the hydraulic servo C-1 is brought closer to the stroke end position each time the sampling time T_{SAM} elapses.

When the piston reaches the stroke end position so that the first clutch C1 transfers to the slip region, the rate of change ρ of the rotational difference ΔN exceeds the reference rate of change ρ_{REF}.

As shown in Fig. 14, for example, after the start of the application of the first clutch C1, the variation δ of the rotational difference ΔN exceeds a threshold value N_{RA} at a timing t4 before lapse of the time period T_{S1}. Therefore, the automatic transmission control unit 41 decides that the first clutch C1 has transferred from the drag region to the slip region at the timing t4 (i.e., at the instant when it is decided by the control program of the automatic transmission control system 41 that the variation δ has exceeded the threshold value N_{RA}), and lowers the C-1 oil pressure P_{C1} by set pressures ΔP_{DOWN}. At this timing t4, the sampling time T_{SAM} is reset. If, in this case, the timings after lapses of the time period T_{S1} and T_{S2} and the sampling time T_{SAM} from the timing t4 are respectively designated by t5 to t7, the threshold value ΔN_{R1} is set at each of the timings t5 to t7.

Thus, the C-1 oil pressure P_{C1} is lowered when the first clutch C1 transfers from the drag region to the slip region, the first clutch C1 is always held in the state immediately before it transfers from the drag region to the slip region.

Since the individual friction elements of the first clutch C1 are thus hardly brought into contact with each other, the torque T_{q} to be transmitted from the engine 10 to the speed change unit 16 is extremely reduced. This makes it possible not only to improve the fuel economy but also to prevent any idle vibration in the vehicle. It is further possible to prevent the individual friction elements of the first clutch C1 from being heated to deteriorate their durability.

Moreover, the piston of the hydraulic servo C-1 is held immediately ahead of the stroke end position. Hence, the loss stroke of the piston can be reduced to prevent any delay in the application, as might otherwise be caused by the loss stroke. As a result, it is possible to prevent the racing and application shock of the engine 10.

In the aforementioned drag region, the variation δ of the rotational difference ΔN does not exceed the threshold value ΔN_{Ri} so that the automatic transmission control unit 41 raises the C-1 oil pressure P_{C1} by the set pressure ΔP_{UP} each time of lapse of the sampling time T_{SAM}, to transfer the applied/released states of the first clutch C1 to the side of the slip region. However, the rise of the actual C-1 oil pressure P_{C1} in the hydraulic servo C-1 is delayed by the viscous resistance or the like of the oil when the C-1 oil pressure P_{C1} is raised by the set pressure ΔP_{UP}.

In the previous decision, it may be apparently decided that the variation δ does not exceed the threshold value ΔN_{Ri}, if a delay is left in the rise of the C-1 oil pressure P_{C1} at the instant of lapse of the sampling time T_{SAM} after the C-1 oil pressure P_{C1} has been raised by the set pressure ΔP_{UP}. Since, in this case, the C-1 oil pressure P_{C1} is raised more prematurely than necessary by the set pressure ΔP_{UP}, the delays in the rise of the C-1 oil pressure P_{C1} are accumulated to cause the overshoot at the transfer from the drag region to the slip region.

Moreover, the piston is retracted more than necessary if the sampling time T_{SAM} is longer than necessary.

Therefore, this sampling time T_{SAM} is so set to correspond to the necessary time period for the end of the actual change in the C-1 oil pressure P_{C1} when the C-1 oil pressure P_{C1} is raised by the set pressure Δ P_{UP}, that the C-1 oil pressure P_{C1} may be raised at proper time instants.

Thus, the C-1 oil pressure P_{C1} is raised by the set pressure ΔP_{UP} after the delay in its rise has disappeared. As a result, no accumulation of delays can be caused to prevent the overshoot at the time when the first clutch C1 transfers from the drag region to the slip region.

Moreover, the piston of the hydraulic servo C-1 can be prevented from retracting more than necessary.

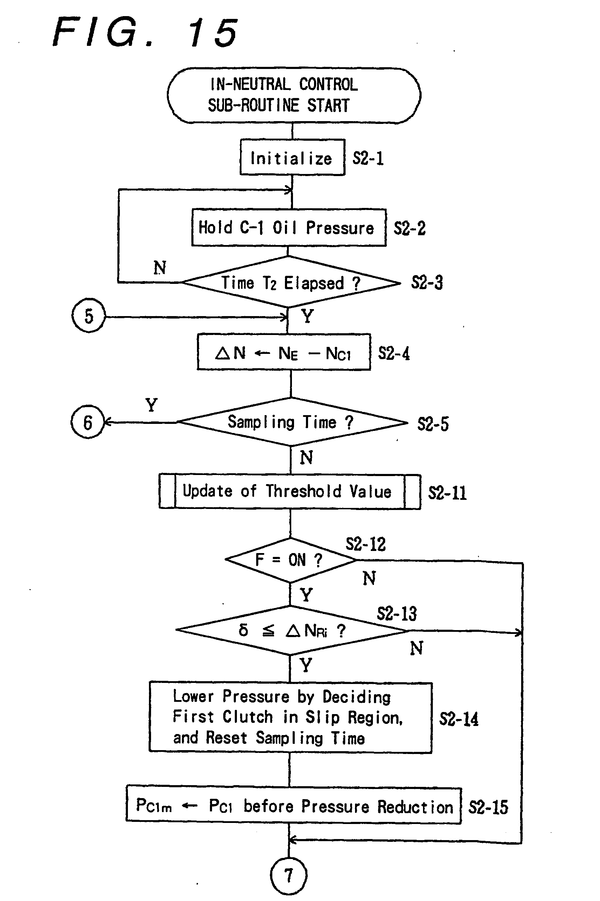

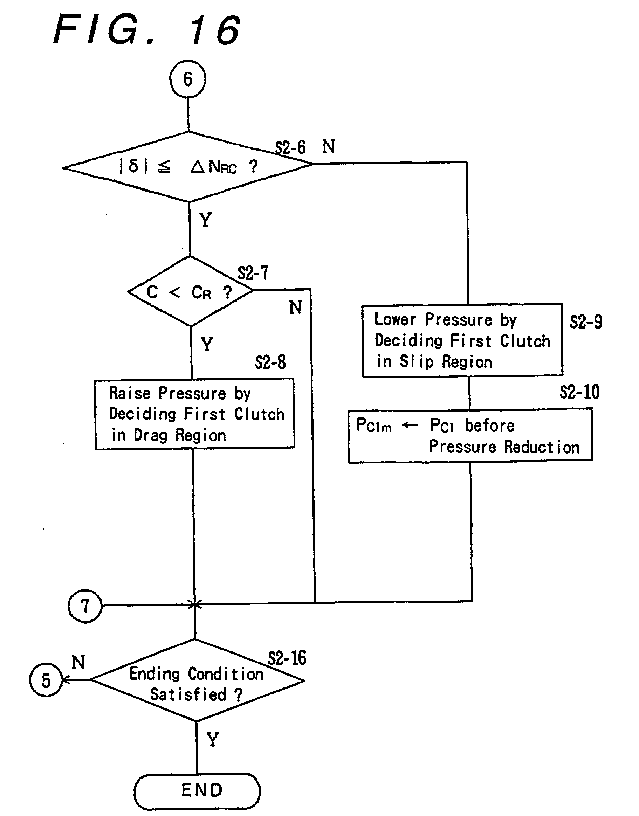

Next, the in-neutral control sub-routine of Step S2 of Fig. 6 will be described with reference to Figs. 15 and 16.

Fig. 15 is a first flow chart of an in-neutral control routine in the mode of embodiment of the present invention, and Fig. 16 is a second flow chart of an in-neutral control routine in the mode of embodiment of the present invention.

Step S2-1: The initial values of an oil pressure control flag F, a counted value C of the not-shown counter and the reference rotational difference ΔNₘ are set, as follows:
F ← OFF;
C - 0;
   and
ΔNₘ ← the value of the rotational difference ΔN (= N_{E} - N_{C1}) at this time.

Steps S2-2 and S2-3: The C-1 oil pressure P_{C1} is held at the final value in the first clutch releasing control routine. If the decision of whether or not the rotational difference ΔN has changed is started immediately after it has been confirmed that the first clutch C1 is released to the predetermined state, an erroneous decision may be made by the change in the rotational difference ΔN, as caused by the pressure reduction in the first clutch release control routine. Therefore, the timing is performed by the not-shown second timer to await the elapse of a time period T₂, for which the C-1 oil pressure P_{C1} is held. As a result, the decision on whether or not the rotational difference ΔN has changed is delayed so that the C-1 oil pressure P_{C1} can be prevented from being controlled in an unstable state immediately after the first clutch C1 has been released.

Step S2-4: Here is calculated the rotational difference ΔN between the clutch input side RPM N_{C1} and the engine RPM N_{E}.

Step S2-5: It is decided whether or not the predetermined time T_{SAM} such as 1.0 [secs] or 0.5 [secs] has elapsed. The routine advances to Step S2-6, if the sampling time T_{SAM} has elapsed, but to Step S2-11 if the sampling time T_{SAM} has not elapsed.

Step S2-6: It is decided whether or not the difference between the rotational difference ΔN and the reference rotational difference ΔNₘ, i.e., the absolute value of the variation δ is below a threshold value ΔN_{RC}. The routine advances to Step S2-7, if the absolute value of the variation δ is below or equal the threshold value ΔN_{RC}, but to Step S2-9 if the absolute value of the variation δ is over the threshold value ΔN_{RC}.

Step S2-7: It is decided whether or not the counted value C is below a set value C_{R}. The routine advances to Step S2-8, if the counted value C is below the set value C_{R}, but to Step S2-16 if the counted value C is equal or over the set value C_{R}.

Step S2-8: Since the absolute value of the variation δ is below the threshold value ΔN_{RC} even after the sampling time T_{SAM} has elapsed, it is decided that the first clutch C1 is in the drag region, and the automatic transmission control unit (Fig. 2) raises (or boosts) the C-1 oil pressure P_{C1} by the set pressure ΔP_{UP} at the instant when the sampling time T_{SAM} elapses:
P_{C1} ← P_{C1} + ΔP_{UP}.

Moreover, the rotational difference ΔN is set to the reference rotational difference ΔNₘ, and the oil pressure control flag F is turned ON:
ΔNₘ ← ΔN;
   and
F ← ON.

Step S2-9: It can be decided that the first clutch C1 is transferring from the drag region to the slip region. The C-1 oil pressure P_{C1} is lowered (or reduced) by the set pressure ΔP_{DOWN} at the instant when the sampling time T_{SAM} elapses:
P_{C1} ← P_{C1} - ΔP_{DOWN}.

Moreover, the rotational difference ΔN is set to the reference rotational difference ΔNₘ, and the oil pressure control flag F is turned OFF. At the same time, the value "1" is subtracted from the counted value C of the counter:
ΔNₘ ← ΔN;
F ← OFF;
   and
C ← C - 1 (C = 0 for C < 0).

If it is decided at Step S1-12 of the first clutch release routine that the speed ratio e exceeds the constant e₁, it is confirmed that the first clutch C1 is released to some extent. As a result, the first clutch release routine is ended, but the first clutch C1 is not so released that the piston of the hydraulic servo C-1 will start its retraction. This makes it necessary to lower the C-1 oil pressure P_{C1} so much that the first clutch C1 may transfer from the slip region to the drag region. Thus, the operation of Step S2-9 is repeated till the first clutch C1 transfers from the slip region to the drag region.

Once the first clutch C1 transfers from the slip region to the drag region, it is held in the state immediately before the transfer from the drag region to the slip region, so that the operation of Step S2-9 is not executed.

When the variation δ increases over the threshold value ΔN_{RC}, the first clutch C1 can be released so long as the piston of the hydraulic servo C-1 starts its retraction without fail, by repeating the operation of lowering the C-1 oil pressure P_{C1} by the set pressure ΔP_{DOWN}.

Step S2-10: The C-1 oil pressure P_{C1} before the pressure reduction at Step S2-9 is set as a reference C-1 oil pressure P_{C1m} and is stored in the not-shown storage device:
P_{C1m} ← P_{C1} before the pressure reduction.

Step S2-11: The threshold value ΔN_{Ri} is updated.

Step S2-12: It is decided whether or not the oil pressure control flag F is ON, that is, whether or not the C-1 oil pressure P_{C1} is raised at the instant of elapse of the previous sampling time T_{SAM}. The routine advances to Step S2-13, if the oil pressure control flag F is ON, but to Step S2-16 if the oil pressure control flag F is OFF.

Step S2-13: Since the C-1 oil pressure P_{C1} is raised by the set pressure ΔP_{UP} (because the oil pressure control flag F is ON) at the instant of lapse of the previous sampling time T_{SAM}, it is decided whether or not the variation δ or the remainder of the rotational difference ΔN from the reference rotational difference ΔNₘ is below the threshold value Δ ΔN_{Ri}. The routine advances to Step S2-14, if the variation δ is below the threshold value ΔN_{Ri}, but to Step S2-16 if the variation δ is over the threshold value ΔN_{R1}.

Step S2-14: As a result, that the C-1 oil pressure P_{C1} is raised by the set pressure ΔP_{UP} at the instant of elapse of the previous sampling time T_{SAM}, the rotational difference ΔN has highly changed. It is, therefore, decided that the first clutch C1 has transferred from the drag region to the slip region, and the C-1 oil pressure P_{C1} is lowered (or reduced) by the set pressure ΔP_{DOWN} at the later-described instant of Step S2-16:
P_{C1} ← P_{C1} - ΔP_{DOWN}.

Moreover, the sampling time T_{SAM} is reset, and the oil pressure control flag F is turned OFF. At the same time, the value "1" is added to the counted value C of the counter:
F ← OFF;
   and
C ← C + 1.

If, in this time, the C-1 oil pressure P_{C1} is lowered by the set pressure ΔP_{DOWN}, the first clutch C1 takes the state immediately before the transfer form the drag region to the slip region. It is, therefore, desired that the C-1 oil pressure P_{C1} is raised again by the set pressure ΔP_{UP} at the instant when the varied C-1 oil pressure P_{C1} is stabilized by lowering it by the set pressure ΔP_{DOWN}. Therefore, it is detected that the C-1 oil pressure P_{C1} has been lowered by the set pressure ΔP_{DOWN}. At the instant of this detection, the sampling time T_{SAM} is reset to start again the timing.

Thus, the C-1 oil pressure P_{C1} can be raised early by the set pressure ΔP_{UP} after it has been lowered by the set pressure ΔP_{DOWN}, so that the first clutch C1 can be always held in the state immediately before the transfer from the drag region to the slip region.

Incidentally, if the reduction of the C-1 oil pressure P_{C1} is detected when the variation δ exceeds the threshold value ΔN_{RC} after the sampling time T_{SAM} has been reset, the operation of Step S2-9 is executed so that the C-1 oil pressure P_{C1} is further lowered.

When the C-1 oil pressure P_{C1} is lowered by the set pressure ΔP_{DOWN}, the reference rotational difference ΔNₘ is not set. Hence, the variation δ is the difference between the rotational difference ΔN and the reference rotational difference ΔNₘ preceding by one, so that it basically takes substantial zero. Hence, the C-1 oil pressure P_{C1} can be raised by the set pressure ΔP_{UP} after it has been lowered by the set pressure ΔP_{DOWN}. As a result, the operation of Step S2-9 is hardly executed.

Step S2-15: The C-1 oil pressure P_{C1} before lowered at Step S2-14 is set as the reference C-1 oil pressure P_{C1m} and is stored in the not-shown storage device: P_{C1m} ← P_{C1} before lowered.

Step S2-16: It is decided whether or not the condition for ending the in-neutral control of the first clutch C1 is satisfied. The in-neutral control routine is ended, if the ending condition is satisfied, but is returned to Step S2-4 to repeat the aforementioned operation, if the ending condition is not satisfied.

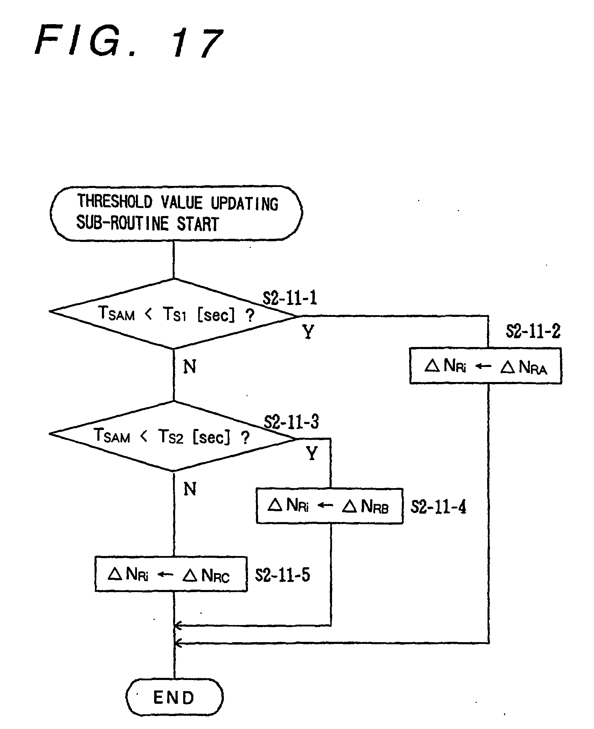

Next, the sub-routine for updating the threshold value ΔN_{R1} at Step S2-11 of Fig. 15 will be described with reference to Fig. 17.

Fig. 17 is a flow chart of a threshold value updating routine in the mode of embodiment of the present invention.

In the present mode of embodiment: a threshold value ΔN_{RA} is set to 15 [rpm]; a threshold value Δ N_{RB} is set to 20 [rpm]; and a threshold value ΔN_{RC} is set to 30 [rpm].

Step S2-11-1: It is decided whether or not a time period (as will be called the "elapsed time") Tₛₐₘ, as elapsed from the start of timing of the sampling time T_{SAM}, is shorter than the time T_{S1}. The routine advances to Step S2-11-2, if the elapsed time Tₛₐₘ is shorter than the time T_{S1}, but to Step S2-11-3 if the lapse time Tₛₐₘ is longer than the time T_{S1}.

Step S2-11-2: The value ΔN_{RA} is set as the threshold value ΔN_{Ri}.

Step S2-11-3: It is decided whether or not the elapsed time Tₛₐₘ is shorter than the time T_{S2}. The routine advances to Step S2-11-4, if the elapsed time Tₛₐₘ is shorter than the time T_{S2}, but to Step S2-11-5 if the elapsed time Tₛₐₘ is longer than the time T_{S2}.

Step S2-11-4: The value ΔN_{RB} is set as the threshold value ΔN_{R1}.

Step S2-11-5: The value ΔN_{RC} is set as the threshold value ΔN_{R1}.

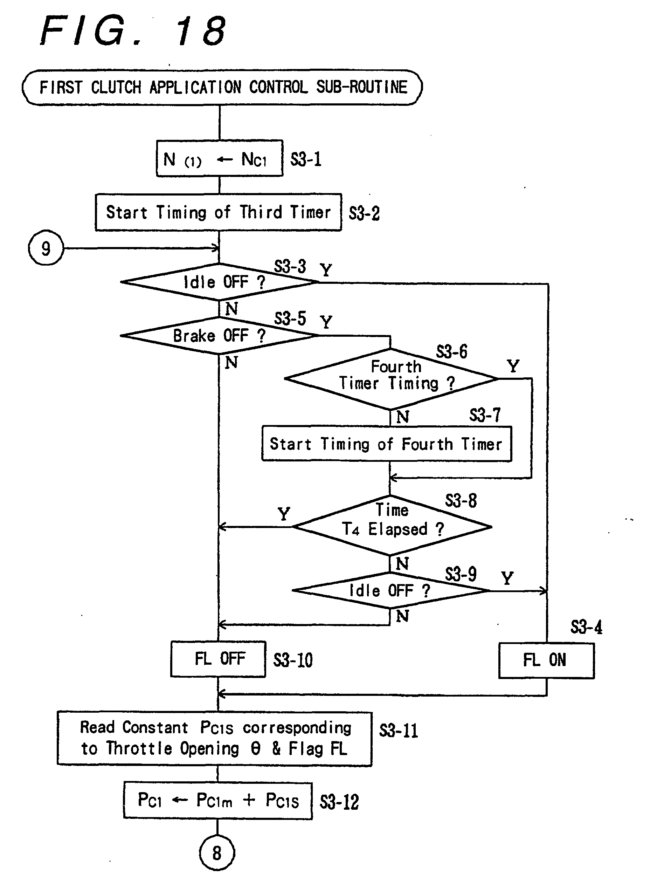

Next, the first clutch application control sub-routine at Step S3 of Fig. 6 will be described with reference to Figs. 18 to 24.

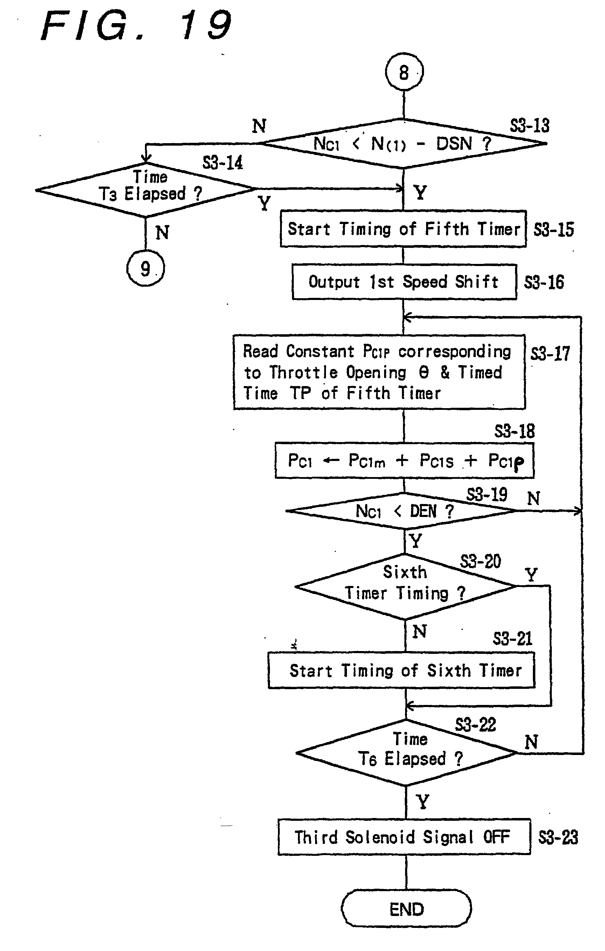

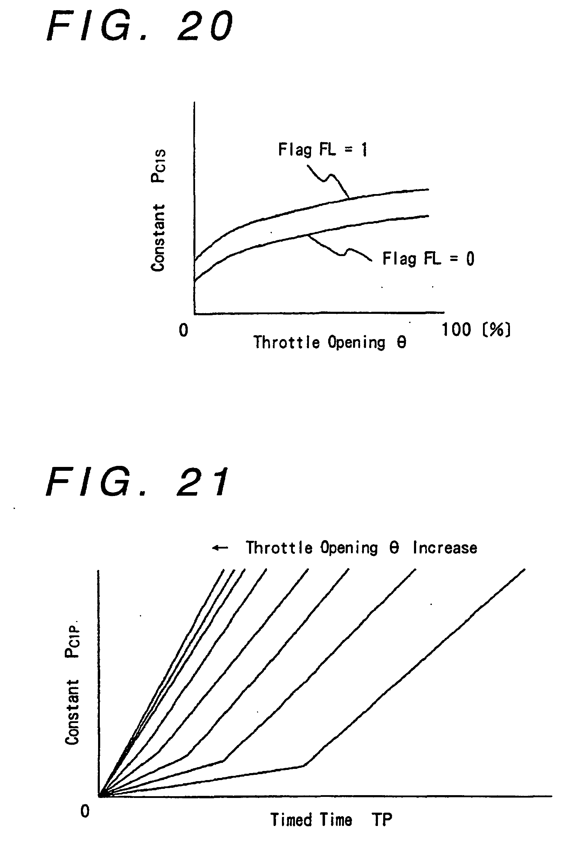

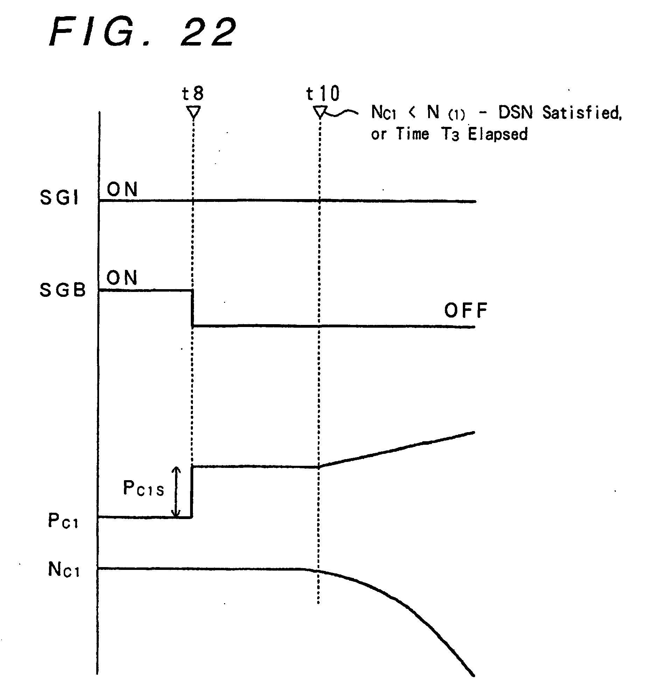

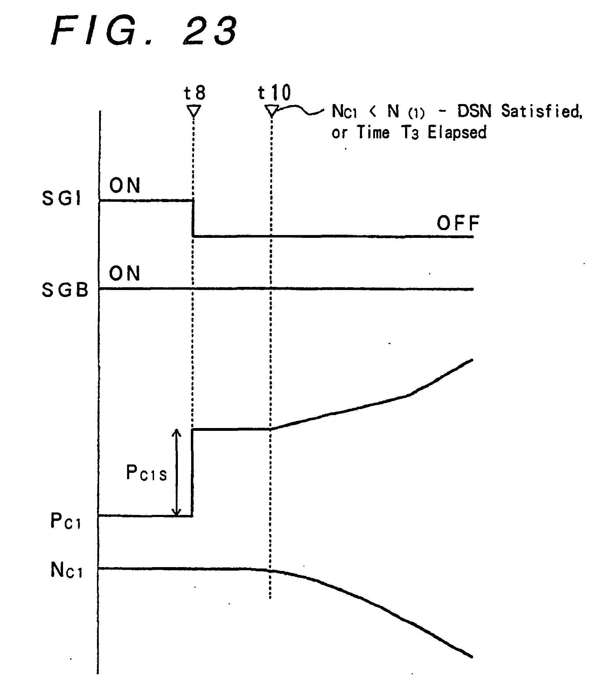

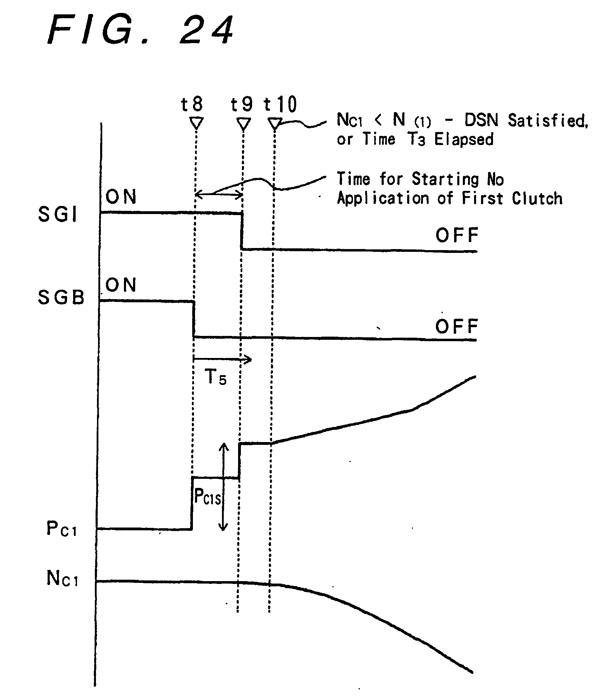

Fig. 18 is a first flow chart of a first clutch application control routine in the mode of embodiment of the present invention; Fig. 19 is a second flow chart of a first clutch application control routine in the mode of embodiment of the present invention; Fig. 20 is a diagram showing a first map in the mode of embodiment of the present invention; Fig. 21 is a diagram showing a second map in the mode of embodiment of the present invention; Fig. 22 is a time chart illustrating a first characteristic of the C-1 oil pressure in the mode of embodiment of the present invention; Fig. 23 is a time chart illustrating a second characteristic of the C-1 oil pressure in the mode of embodiment of the present invention; and Fig. 24 is a time chart illustrating the state at the changing time from the first characteristic to the second characteristic of the C-1 oil pressure in the mode of embodiment of the present invention. Incidentally, the abscissa of Fig. 20 indicates the throttle opening θ, and the ordinate indicates a constant P_{C1S}. The abscissa of Fig. 21 indicates a measured time TP, and the ordinate indicates a constant P_{C1P}.

Incidentally, if the vehicle is started in the idle state, the engagement of the first clutch C1 (Fig. 2) is started as the not-shown brake pedal is released to start the rise in the C-1 oil pressure P_{C1}. As a result, no influence then occurs even if a delay in the engagement of the first clutch C1 occurs when the not-shown accelerator pedal is depressed.

If the vehicle is started in the stall state, on the contrary, the not-shown accelerator pedal is depressed to start the rise in the C-1 oil pressure P_{C1} and the engagement of the first clutch C1. If the engagement of the first clutch C1 is delayed, the engine RPM N_{E} has already risen as the accelerator pedal is depressed, when the engagement of the first clutch C1 is started. As a result, the application shock is caused by the delay in the engagement of the first clutch C1.

Moreover, if the accelerator pedal is depressed with a slight delay after the brake pedal has been released, the engine RPM N_{E} may have risen while the engagement of the first clutch C1 is not started. In this case, the delay in the engagement occurs as in the stall state to cause the application shock.

If, therefore, the vehicle is started in the idle state, the C-1 oil pressure P_{C1} is gently raised according to the first characteristic, as illustrated in Fig. 22.

If the brake pedal is released at a timing t8 to turn OFF a brake signal SGB when the accelerator pedal is released but the brake pedal is depressed to have both an idle signal SGI and the brake signal SGB ON, the C-1 oil pressure P_{C1} is raised by the constant P_{C1S}. After this, either if the clutch input side RPM N_{C1} is smaller at a timing t10 than the difference, as calculated by subtracting a constant DSN from a value N₍₁₎, or if a time T₃ has elapsed, the C-1 oil pressure P_{C1} is further raised by the constant P_{C1P} to effect the sweep-up.

If the vehicle is started in the stall state, on the contrary, the C-1 oil pressure P_{C1} is raised according to the second characteristic, as illustrated in Fig. 23, to quicken the rise thereby to prevent the delay in the engagement of the first clutch C1.

Specifically, if the accelerator pedal is depressed at the timing t8 to turn OFF the idle signal SGI when the accelerator pedal is released but the brake pedal is depressed to turn ON the idle signal SGI and the brake signal SGB, the C-1 oil pressure P_{C1} is raised by the constant P_{C1S}. In this case, the constant P_{C1S} is set to a larger value than that of the case in which the vehicle is started in the idle state. After this, either if the input side RPM N_{C1} becomes smaller at the timing t10 than the difference, as calculated by subtracting the constant DSN from the value N₍₁₎, or if the time T3 has elapsed, the C-1 oil pressure P_{C1} is further raised by the constant P_{C1P} to effect the sweep-up.

As a result, the delay in the engagement of the first clutch is not caused so that the application shock can be prevented.

Moreover, if the accelerator pedal is depressed with a slight delay after the brake pedal has been released, the C-1 oil pressure P_{C1} is raised according to the first characteristic, as illustrated in Fig. 24, and then at a higher rate according to the second characteristic by the depression of the accelerator pedal so that the delay in the engagement of the first clutch C1 is prevented.

Specifically, if the brake pedal is released at the timing t8 to turn OFF the brake signal SGB when the accelerator pedal is released but the brake pedal is depressed to have both the idle signal SGI and the brake signal SGB ON, the C-1 oil pressure P_{C1} is raised by the constant P_{C1S}. Moreover, if the accelerator pedal is depressed at a timing t9 by the time the engagement of the first clutch C1 is started (that is, by the time a time T₄ elapses after the brake pedal has been released) to turn OFF the idle signal SGI, the constant P_{C1S} is charged to a larger value. After this, either if the clutch input side RPM N_{C1} becomes smaller at the timing t10 than the difference, as calculated by subtracting the constant DSN from the value N₍₁₎, or if the time T₃ has elapsed, the C-1 oil pressure P_{C1} is further raised by the constant P_{C1P} to effect the sweep-up.

As a result, the delay in the engagement of the first clutch C1 is not caused so that the application shock can be prevented.

Thus, the delay in the engagement of the first clutch C1 is not caused no matter how the driver might operate the brake pedal and the accelerator pedal, so that the application shock can be prevented.

Step 3-1: The clutch input side RPM N_{C1} at the instant when the ending condition of the in-neutral control is satisfied is stored as the value N₍₁₎ in the not-shown memory of the automatic transmission control unit 41 (Fig. 2).

Step 3-2: The timing of a third timer is started. This third timer is set with different values depending upon the ON/OFF of a flag FL, in a manner to correspond to the time before the engagement of the first clutch C1 is started. Incidentally, in the mode of the present embodiment, if the vehicle is started in the idle state, the flag FL is turned OFF so that the third timer is set to 0.2 secs. On the other hand, if the vehicle is started in the stall state and if the accelerator pedal is depressed with a slight delay after the brake pedal has been released, the flag FL is turned ON so that the third timer is then set to 0.1 secs.

Step 3-3: It is decided whether or not the accelerator pedal is released to the idle OFF. The routine advances to Step 3-4, if in the idle OFF, and to Step 3-5 if NOT.

Step 3-4: The flag FL is turned ON.

Step 3-5: It is decided whether or not the brake pedal is released to the brake OFF. The routine advances to Step 3-6, if in the brake OFF, and to Step 3-10 if NOT.

Step 3-6: It is decided whether or not a fourth timer is in the timing operation. The routine advances to Step 3-8, if the fourth timer is in the timing operation, and to Step 3-7 if NOT.

Step 3-7: The timing operation of the fourth timer is started.

Step 3-8: The engagement start detecting means 104 (Fig. 1) of the automatic transmission control unit 41 decides whether or not the time T₄ has elapsed. The routine advances to Step 3-10, if the time T₄ has elapsed, and to Step 3-9 if the time T₄ has not elapsed.

In this case, the time period after the brake pedal has been released and before the engagement of the first clutch C1 is started, but the engagement start detecting means 104 detects it by the fourth timer that the engagement of the first clutch C1 is not started. As a result, not only the structure of the automatic transmission control unit 41 can be simplified, but also no detection delay is caused. In addition it is possible to decide accurately whether or not the engagement of the first clutch C1 is started.

Here, the time T₄ to be set in the fourth timer is set to 0.1 secs, as corresponding to the state in which the engagement of the first clutch C1 is not started. As a result, the time T₄ is shorter than the time (i.e., the time T₃ to be set in the third timer) before the engagement of the first clutch C1 is started, so that the state, in which the engagement is not started, can be detected.

Step 3-9: It is decided whether or not the accelerator pedal is released to the idle OFF. The routine advances to Step 3-4, if in the idle OFF, and to Step 3-10 if not in the idle OFF.

Step 3-10: The flag FL is turned OFF.

Step 3-11: With reference to the first map of Fig. 20, the constant P_{C1S} is read in as a shelf pressure set to correspond to the throttle opening θ and the ON/OFF of the flag FL. Incidentally, the constant P_{C1S} is set to such a value as can move the not-shown piston of the hydraulic servo C-1 (Fig. 5) without fail and reduce the application shock to be generated by the engagement.

Specifically, when the vehicle is to be started in the idle state, the constant P_{C1S} is set to a small value so as to raise the C-1 oil pressure P_{C1} gently according to the first characteristic. When the vehicle is to be started in the stall state, on the other hand, the constant P_{C1S} is set to a large value so as to raise the C-1 oil pressure P_{C1} according to the second characteristic thereby to quicken the rise. Moreover, when the accelerator pedal is depressed with a slight delay after the brake pedal has been released, the constant P_{C1S} is made small till the accelerator pedal is depressed, so that the C-1 oil pressure P_{C1} may be raised according to the first characteristic and then according to the second characteristic. After the accelerator pedal has been depressed, the constant P_{C1S} is made large so as to quicken the rise.

For the larger throttle opening θ, on the other hand, the constant P_{C1S} is made the larger. As a result. the first clutch C1 can be applied in a manner to correspond to the magnitude of the input torque so that the delay in the engagement can be prevented in a manner to correspond to the magnitude of the input torque.

Step 3-12: The constant P_{C1S} is added to the reference C-1 oil pressure P_{C1m} as the base pressure set at Step 2-10 and Step S2-15, and the sum is set as the C-1 oil pressure P_{C1}.

As a result, when the driver performs the starting operation so that the shift of the vehicle from the stop state to the start stage, the constant P_{C1S} is added to the reference C-1 oil pressure P_{C1m} so that the oil pressure to be fed to the hydraulic servo C-1 is raised to bring the first clutch C1 into a partial engagement. Subsequently, the oil pressure to be fed to the hydraulic servo C-1 is further raised to bring the first clutch C1 into complete engagement.

Step 3-13: It is decided whether or not the clutch input side RPM N_{C1} is smaller than the difference, as calculated by subtracting the constant DSN from the value N₍₁₎. The routine advances to Step 3-15, if the clutch input side RPM N_{C1} is smaller than the difference, as calculated by subtracting the constant DSN from the value N₍₁₎, and to Step 3-14 if the clutch input side RPM N_{C1} is larger than the difference, as calculated by subtracting the constant DSN from the value N₍₁₎.

Step 3-14: It is decided whether or not the time T₃ has elapsed. The routine advances to Step 3-15, if the time T₃ has elapsed, but returns to Step 3-3 if NOT.

Step 3-15: The timing operation of a fifth timer is started.

Step 3-16: The 1st speed shift output is generated.

Step 3-17: With reference to the map of Fig. 21, there is read the constant P_{C1P} which is set to correspond to the throttle opening θ and the measured time TP of the fifth timer. Incidentally, the constant P_{C1P} is made the larger for the longer measured time TP and the larger throttle opening θ. Therefore, the gradient of the C-1 oil pressure P_{C1} is made the larger for the larger throttle opening θ. As a result, the first clutch C1 can be applied in a manner to correspond to the magnitude of the input torque so that the application shock can be prevented in a manner to correspond to the magnitude of the input torque.

In this case, the setting of the constant P_{C1P} is not difference between the first characteristic and the second characteristic. As a result, after the engagement of the first clutch C1 has been started, the oil pressure for the second characteristic can be gently raised as in the first characteristic so that the engagement of the first clutch C1 is smoothed.

Step 3-18: The constants P_{C1S} and P_{C1P} are added to the reference C-1 oil pressure P_{C1m}, and the sum is set as the C-1 oil pressure P_{C1}.

Step 3-19: It is decided whether or not the clutch input RPM N_{C1} is smaller than a constant DEN. The routine advances to Step 3-20, if the clutch input RPM N_{C1} is smaller than the constant DEN, but returns to Step 3-17 if the clutch input RPM N_{C1} is more than the constant DEN.

Step 3-20: It is decided whether or not the sixth timer is in the timing operation. The routine advances to Step 3-22, if the sixth timer is in the timing operation, but to Step 3-21 if NOT.

Step 3-21: The timing operation of the sixth timer is started.

Step 3-22: It is decided whether or not a time T₆ has elapsed. The routine advances to Step 3-23, if the time T₆ has elapsed, but returns to Step 3-17 if NOT.

Step 3-23: The third solenoid signal S₃ is turned OFF.

Incidentally, the present invention should not be limited to the foregoing mode of embodiment but can be modified in various manners without departing from its gist, and these modifications should not be excluded from the scope of the present invention.

According to the present invention, as described hereinbefore, the control system for an automatic transmission comprises: a clutch adapted to be applied when a forward running range is selected, for transmitting the rotation of an engine to a speed change unit; a hydraulic servo for applying the clutch when fed with an oil pressure; and a control unit for controlling the oil pressure to be fed to the hydraulic servo.

Moreover, the control unit includes: stop state detecting means for detecting the stop state of a vehicle, as conditioned by that the vehicle speed is substantially zero, that the accelerator pedal is released and that the brake pedal is depressed; release means for bringing the clutch into a substantially released state by lowering the oil pressure of the hydraulic servo when the vehicular stop state is detected; application means for applying the clutch when the vehicular stop state is not detected during the operation of the release means; and engagement start detecting means for detecting whether or not the engagement of the clutch is started.

In this case, if the forward running range is selected, if the accelerator pedal is released and if the brake pedal is depressed, the stop state of the vehicle is detected by the stop state detecting means, and the release means lowers the oil pressure of the hydraulic servo to bring the clutch into a substantially released state.

Moreover, the application means raises the oil pressure to be fed to the hydraulic servo, according to a first characteristic, if the vehicular stop state is not detected by releasing the brake pedal with the accelerator pedal being released, according to a second characteristic, in which the rising rate in the oil pressure is higher than that of the first characteristic, if the vehicular stop state is not detected by depressing the accelerator pedal, and according to the second characteristic in preference to the first characteristic if the vehicular stop state is not detected by releasing the brake pedal with the accelerator pedal being released and if the accelerator pedal is depressed while it is detected that the engagement of the clutch is not started.

When the vehicle is started in the idle state, the oil pressure to be fed to the hydraulic servo is gently raised according to the first characteristics. When the vehicle is started in the stall state, on the other hand, the oil pressure to be fed to the hydraulic servo is quickly raised according to the second characteristic. As a result, the engagement delay of the clutch can be eliminated to prevent the application shock.

Moreover, if the accelerator pedal is depressed with a slight delay after the brake pedal has been released, the oil pressure to be fed to the hydraulic servo is raised according to the second characteristic in preference to the first characteristic so that it is further raised quickly when the accelerator pedal is depressed. As a result, the engagement delay of the clutch can be eliminated to prevent the application shock.

As a result, the engagement delay of the clutch can be eliminated no matter how the driver might operate the brake pedal and the accelerator pedal, thereby to prevent the application shock.

In another control system for an automatic transmission of the present invention, moreover, the engagement start detecting means decides that the engagement of the clutch is not started, if the time has elapsed from the start of the feed of the oil pressure to the hydraulic servo does not reach the time which is set to correspond to the state in which the engagement of the clutch is not started.

In this case, the period after the brake pedal has been released and before the engagement of the clutch is started is remarkably short, but it can be detected by the timer that the engagement of the clutch is not started. As a result, not only the structure of the control system for an automatic transmission can be simplified, but also there is no delay in the detection. Moreover, it can be accurately decided whether or not the engagement of the clutch is started.

In still another control system for an automatic transmission of the present invention, moreover, in the first characteristic, a constant shelf pressure is generated by the time the engagement of the clutch is started, and the oil pressure is then raised at a constant gradient, and wherein in the second characteristic, a shelf pressure higher than that of the first characteristic is generated, and the oil pressure is then raised at a constant gradient.

In this case, the engagement delay of the clutch is prevented by raising the shelf pressure, and the oil pressure to be fed to the hydraulic servo is then gradually raised. As a result, after the engagement of the clutch has been started, the oil pressure can be gently raised as in the first characteristic so that the engagement of the clutch is smoothed.

In a further control system for an automatic transmission of the present invention, moreover, the shelf pressures of the first characteristic and the second characteristic are made the higher for the larger throttle opening, and wherein the gradients of the oil pressures of the first characteristic and the second characteristic are made the steeper for the larger throttle opening.

In this case, the clutch can be applied in a manner to correspond to the magnitude of the input torque. As a result, not only the engagement delay can be prevented in a manner to correspond to the magnitude of the input torque, but also the application shock can be prevented in a manner to the magnitude of the input torque.

## Claims

1. A control system for an automatic transmission, comprising: a clutch (C1) adapted to be applied when a forward running range is selected, for transmitting the rotation of an engine (10) to a speed change unit (16); a hydraulic servo (C-1) for applying the clutch when fed with an oil pressure; and a control unit (41) for controlling the oil pressure to be fed to the hydraulic servo,
wherein the control unit (41) includes: stop state detecting means (101) for detecting the stop state of a vehicle, as conditioned by that the vehicle speed is substantially zero, that the accelerator pedal is released and that the brake pedal is depressed; release means (102) for bringing the clutch into a substantially released state by lowering the oil pressure of the hydraulic servo (C-1) when the vehicular stop state is detected; application means (103) for applying the clutch when the vehicular stop state is not detected during the operation of the release means; and engagement start detecting means (104) for detecting whether or not the engagement of the clutch is started, and
wherein the application means (103) raises the oil pressure to be fed to the hydraulic servo, according to a first characteristic set to correspond to the throttle opening, if the vehicular stop state is not detected by releasing the brake pedal with the accelerator pedal being released, according to a second characteristic set to correspond to the throttle opening, if the vehicular stop state is not detected by depressing the accelerator pedal, and according to the second characteristic in place of the first characteristic if the vehicular stop state is not detected by releasing the brake pedal with the accelerator pedal being released and if the accelerator pedal is depressed while it is detected that the engagement of the clutch is not started,
wherein the oil pressure of the second characteristic is higher than that of the first characteristic for the same throttle opening.

2. A control system for an automatic transmission according to claim 1,
wherein the engagement start detecting means (104) decides that the engagement of the clutch (C1) is not started, if the time has elapsed from the start of the feed of the oil pressure to the hydraulic servo does not reach the time which is set to correspond to the state in which the engagement of the clutch (C1) is not started.

3. A control system for an automatic transmission according to claim 1 or 2,
wherein in the first characteristic, a constant shelf pressure is generated by the time the engagement of the clutch is started, and the oil pressure is then raised at a constant gradient, and
wherein in the second characteristic, a shelf pressure higher than that of the first characteristic is generated, and the oil pressure is then raised at a constant gradient.

4. A control system for an automatic transmission according to claim 3,
wherein the shelf pressures of the first characteristic and the second characteristic are made higher for the larger throttle opening, and
wherein the gradients of the oil pressures of the first characteristic and the second characteristic are made steeper for the larger throttle opening.

## Patentansprüche

1. Steuerungssystem für ein Automatikgetriebe mit: einer Kupplung (C1), die dazu geeignet ist, eingerückt zu werden, wenn ein Vorwärtsfahrbereich ausgewählt ist, um die Drehbewegung eines Motors (10) zu einer Gangschalteinheit (16) zu übertragen; einer Hydraulik-Servoeinrichtung (C-1) zum Einrücken der Kupplung, wenn ihr ein Öldruck zugeführt wird; und einer Steuereinheit (41) zum Steuern des der Hydraulik-Servoeinrichtung zuzuführenden Öldrucks;
wobei die Steuereinheit (41) aufweist: eine Haltezustanderfassungseinrichtung (101) zum Erfassen eines Haltezustands eines Fahrzeugs, der dadurch gegeben ist, daß die Fahrzeuggeschwindigkeit im wesentlichen null beträgt, das Beschleunigungspedal freigegeben und das Bremspedal betätigt ist; eine Ausrückeinrichtung (102), die dazu geeignet ist, die Kupplung auf einen im wesentlichen ausgerückten Zustand einzustellen, indem der Öldruck der Hydraulik-Servoeinrichtung (C-1) vermindert wird, wenn der Fahrzeughaltezustand erfaßt wird; eine Einrückeinrichtung (103) zum Einrücken der Kupplung, wenn während der Operation der Ausrückeinrichtung der Fahrzeughaltezustand nicht erfaßt wird; und eine Einrichtung (104) zum Erfassen des Beginns des Kupplungseinrückvorgangs zum Erfassen, ob die Kupplung beginnt einzurücken oder nicht;
wobei die Einrückeinrichtung (103) den der Hydraulik-Servoeinrichtung zuzuführenden Öldruck gemäß einer entsprechend der Drosselklappenöffnung festgelegten ersten Kennlinie erhöht, wenn der Fahrzeughaltezustand nicht erfaßt wird, weil das Bremspedal freigegeben ist, während das Beschleunigungspedal freigegeben ist, gemäß einer entsprechend der Drosselklappenöffnung festgelegten zweiten Kennlinie, wenn der Fahrzeughaltezustand nicht erfaßt wird, weil das Beschleunigungspedal betätigt ist, und gemäß der zweiten Kennlinie an Stelle der ersten Kennlinie, wenn der Fahrzeughaltezustand nicht erfaßt wird, weil das Bremspedal freigegeben ist, während das Beschleunigungspedal freigegeben ist, und wenn das Beschleunigungspedal betätigt wird, während erfaßt wird, daß die Kupplung nicht begonnen hat einzurücken;
wobei der Öldruck der zweiten Kennlinie für die gleiche Drosselklappenöffnung größer ist als bei der ersten Kennlinie.

2. Steuerungssystem für ein Automatikgetriebe nach Anspruch 1,
wobei die Einrichtung (104) zum Erfassen des Beginns des Kupplungseinrückvorgangs entscheidet, daß die Kupplung (C1) nicht begonnen hat einzurücken, wenn die seit Beginn der Öldruckzufuhr zur Hydraulik-Servoeinrichtung verstrichene Zeit nicht die Zeit erreicht, die gemäß dem Zustand gesetzt ist, in dem die Kupplung (C1) nicht beginnt einzurücken.

3. Steuerungssystem für ein Automatikgetriebe nach Anspruch 1 oder 2,
wobei gemäß der ersten Kennlinie ein konstanter Zusatzdruck in der Zeit erzeugt wird, in der die Kupplung beginnt einzurücken, und der Öldruck dann mit einem konstanten Gradienten erhöht wird; und
wobei gemäß der zweiten Kennlinie ein Zusatzdruck erzeugt wird, der höher ist als der gemäß der ersten Kennlinie erzeugte Zusatzdruck, und der Öldruck dann mit einem konstanten Gradienten erhöht wird.

4. Steuerungssystem für ein Automatikgetriebe nach Anspruch 3,
wobei der Zusatzdruck der ersten und der zweiten Kennlinie für eine größere Drosselklappenöffnung auf einen höheren Wert gesetzt werden; und
wobei die Gradienten der Öldrücke der ersten und der zweiten Kennlinie für eine größere Drosselklappenöffnung auf einen höheren Wert gesetzt werden.

## Revendications

1. Système de commande pour une transmission automatique, comprenant : un embrayage (C1) adapté pour être appliqué lorsqu'une plage de marche avant est sélectionnée, pour transmettre la rotation d'un moteur (10) à une unité de changement de vitesse (16) ; un dispositif d'asservissement hydraulique (C-1) pour appliquer l'embrayage lorsque l'on y délivre une pression d'huile ; et une unité de commande (41) pour commander la pression d'huile devant être délivrée au dispositif d'asservissement hydraulique,
dans lequel l'unité de commande (41) comprend : des moyens de détection d'état d'arrêt (101) pour détecter l'état d'arrêt d'un véhicule, conditionné par le fait que la vitesse du véhicule est sensiblement de zéro, que la pédale d'accélérateur est relâchée et que la pédale de frein est enfoncée ; des moyens de relâchement (102) pour amener l'embrayage dans un état sensiblement relâché en diminuant la pression d'huile du dispositif d'asservissement hydraulique (C-1) lorsque l'état d'arrêt du véhicule est détecté ; des moyens d'application (103) pour appliquer l'embrayage lorsque l'état d'arrêt du véhicule n'est pas détecté durant le fonctionnement des moyens de relâchement ; et des moyens de détection de commencement de mise en prise (104) pour détecter si oui ou non la mise en prise de l'embrayage est commencée, et
dans lequel les moyens d'application (103) élèvent la pression d'huile devant être délivrée au dispositif d'asservissement hydraulique, en fonction d'une première caractéristique établie de façon à correspondre à l'ouverture des gaz, si l'état d'arrêt du véhicule n'est pas détecté à cause du relâchement de la pédale de frein lorsque la pédale d'accélérateur est relâchée, en fonction d'une deuxième caractéristique établie de façon à correspondre à l'ouverture des gaz, si l'état d'arrêt du véhicule n'est pas détecté à cause de l'enfoncement de la pédale d'accélérateur, et en fonction de la deuxième caractéristique à la place de la première caractéristique si l'état d'arrêt du véhicule n'est pas détecté à cause du relâchement de la pédale de frein lorsque la pédale d'accélérateur est relâchée et si la pédale d'accélérateur est enfoncée alors qu'il est détecté que la mise en prise de l'embrayage n'est pas commencée,
dans lequel la pression d'huile de la deuxième caractéristique est supérieure à celle de la première caractéristique pour la même ouverture de gaz.

2. Système de commande pour une transmission automatique selon la revendication 1,
dans lequel les moyens de détection de commencement de mise en prise (104) décident que la mise en prise de l'embrayage (C1) n'est pas commencée si le temps qui s'est écoulé à partir du commencement de la délivrance de la pression d'huile au dispositif d'asservissement hydraulique n'a pas atteint le temps qui est établi afin de correspondre à l'état dans lequel la mise en prise de l'embrayage (C1) n'a pas commencé.

3. Système de commande pour une transmission automatique selon la revendication 1 ou 2,
dans lequel, dans la première caractéristique, une pression générale constante est générée pendant le temps où la mise en prise de l'embrayage est commencée, et la pression d'huile est ensuite élevée selon un gradient constant, et
dans lequel, dans la deuxième caractéristique, une pression générale supérieure à celle de la première caractéristique est générée, et la pression d'huile est ensuite élevée selon un gradient constant.

4. Système de commande pour une transmission automatique selon la revendication 3,
dans lequel les pressions générales de la première caractéristique et de la deuxième caractéristique sont rendues plus élevées pour une ouverture de gaz plus grande, et
dans lequel les gradients des pressions d'huile de la première caractéristique et de la deuxième caractéristique sont rendus plus raides pour une ouverture de gaz plus grande.
